# EUROPÄISCHE PATENTSCHRIFT

(11) **EP 1 987 370 B1**
(45) Veröffentlichungstag und Bekanntmachung des Hinweises auf die Patenterteilung: **24.12.2014**
(21) Anmeldenummer: 07711197.9
(22) Anmeldetag: 16.02.2007
(51) Int. Cl.: G07C 9/00, G01S 1/68

(54) **SENSOR-/AKTOR-ANORDNUNG UND VERFAHREN ZUM LOKALISIEREN BZW. LEITEN VON BEWEGLICHEN OBJEKTEN UND/ODER PERSONEN AUF EINER FLÄCHE MIT HILFE EINER SENSOR-/AKTOR-ANORDNUNG**
SENSOR/ACTUATOR ARRANGEMENT AND METHOD FOR LOCATING AND GUIDING MOVING OBJECTS AND/OR PEOPLE IN AN AREA WITH THE AID OF A SENSOR/ACTUATOR ARRANGEMENT
DISPOSITION DE CAPTEUR/ACTIVATEUR ET PROCEDE POUR LA LOCALISATION RESPECTIVEMENT LE GUIDAGE D'OBJETS ET/OU DE PERSONNES MOBILES SUR UNE SURFACE A L'AIDE D'UNE DISPOSITION DE CAPTEUR/ACTIVATEUR

(30) Priorität: 20.02.2006 DE 102006007780
(43) Veröffentlichungstag der Anmeldung: 05.11.2008
(73) Patentinhaber: Future-Shape GmbH, 85635 Höhenkirchen-Siegertsbrunn (DE)
(72) Erfinder: STEINHAGE, Axel, 85614 Kirchseeon (DE); LAUTERBACH, Christl, 85635 Höhenkirchen-Siegertsbrunn (DE)
(74) Vertreter: Viering, Jentschura & Partner Patent- und Rechtsanwälte
(86) Internationale Anmeldenummer: PCT/DE2007/000323
(87) Internationale Veröffentlichungsnummer: WO 2007/095920

(56) Entgegenhaltungen:
- WO-A-00/75417
- WO-A-2005/020171
- WO-A-2005/071597
- US-A1- 2005 088 299
- US-B1- 6 377 888

## Beschreibung

Die Erfindung betrifft eine Sensor-/Aktor-Anordnung und ein Verfahren zum Lokalisieren bzw. Leiten von beweglichen Objekten und/oder Personen mit Hilfe einer Sensor-/Aktor-Anordnung.

Bislang ist für eine Ortsbestimmung oder eine Steuerung von Robotern bzw. bei Leitsystemen ein hoher Aufwand erforderlich hinsichtlich des Anlernens des Systems und der Orientierung der Roboter in Gebäuden. Dazu benötigen die derzeit verfügbaren Systeme zum Beispiel Kameras mit Bildauswertung, Abstandsmessung etc. Eine neuere Methode stellt die Orientierung von Robotern mit Hilfe von in einem Bodenbelag integrierten RFID-Tags (Radio Frequency Identification Tags) dar. Wird ein Roboterfahrzeug mit einer RFID-Lese-Einrichtung (RFID-Reader) ausgestattet und wird eine Kartisierung der Bodenfläche mit den integrierten RFID-Tags vorgenommen, so kann das Fahrzeug beim Überfahren eines Tags die Nummer des Tags einlesen und sich mittels der eingespeicherten Kartisierung lokalisieren, siehe z.B. [1].

Das Lokalisieren von Personen ist mit der oben beschriebenen Methode nicht möglich, da eine Person in der Regel keinen RFID-Reader am Körper trägt. Zum Lokalisieren von Personen kann beispielsweise ein mit einem selbstorganisierenden Sensornetzwerk ausgestatteter Bodenbelag verwendet werden, d.h. einem Sensornetzwerk, bei dem die Position der einzelnen Netzwerkelemente innerhalb des Sensornetzwerkes bezogen auf eine Referenz-Position automatisch bestimmt wird. Das Bestimmen der jeweiligen Position erfolgt dabei unter lokalem Austausch elektronischer Nachrichten lediglich zwischen einander unmittelbar benachbart angeordneten Netzwerkelementen. Dieses selbstorganisierende Sensornetzwerk hat den Nachteil, dass durch die Selbstorganisation ein hoher Rechenaufwand entsteht. Die integrierten Netzwerkelemente stellen deshalb eine relativ hohe Anforderung an die Leistungsfähigkeit des integrierten Prozessors und weisen einen hohen Speicherbedarf für die Firmware auf. Die Datenanschlüsse eines solchen Systems sind außerdem auf eine Seite des Netzwerkes beschränkt und erzeugen damit unter Umständen ein Installations- und/oder Zuverlässigkeitsproblem während des Gebrauchs. Sensorsignale werden nicht direkt zu einer zentralen Steuereinheit weitergeleitet, sondern sie werden von Knoten zu Knoten im Netzwerk weitergeleitet. Dies hat den Nachteil, dass das System relativ langsam wird, und dass unter Umständen sogar Signale nicht verarbeitet werden, wenn der Datenverkehr im Netzwerk zu groß wird.

In [3] ist ein elektrisches Haushaltsgerät offenbart mit wenigstens einem Sensor zur Erfassung wenigstens eines Betriebsparameters und wenigstens einem Aktor zur Beeinflussung wenigstens eines Betriebsparameters des elektrischen Haushaltsgeräts, wobei der wenigstens eine Sensor und der wenigstens eine Aktor elektrisch mit einer zentralen Rechen- und Steuereinheit zur Steuerung des elektrischen Haushaltsgeräts gekoppelt sind, und wobei die zentrale Rechen- und Steuereinheit mit einer Kommunikationseinheit gekoppelt ist, die eine drahtlose Kommunikation mit einer externen Gegenstelle erlaubt.

In [4] sind ein Verfahren und ein Telematikgerät offenbart zum Erstellen und Aussenden von verkehrsrelevanten Daten, wobei die Daten mit Sensoren an Bord eines Kraftfahrzeuges erstellt worden sind.

In [5] ist ein Verfahren offenbart zur Erfassung und Verarbeitung verkehrstelematischer Daten, wobei die Datenerfassung durch satellitengestützte Erfassungssysteme erfolgt.

In [6] ist ein System mit in einem Bodenbelag regelmäßig verteilten passiven RFID-Tags zur Lokalisierung von Personen beschrieben, um blinden Personen die Orientierung zu erleichtern.

In [7] sind intelligente Bodenbeläge mit Sensorelementen beschrieben, die Belastungsdaten und die Änderung von physikalischen Zustandsgrößen, die die Bodenbeläge betreffen, ermitteln.

In [8] wird eine vielseitig einsetzbare Sensornetzwerk-Architektur beschrieben, bei welcher eine Lesevorrichtung über Radiowellen mit drahtlosen Sensoreinheiten kommuniziert und ihnen zugleich Energie bereitstellt.

Der Erfindung liegt das Problem zugrunde, ein System zum Lokalisieren und/oder Leiten von Gegenständen und/oder Personen zu schaffen, welches die aus dem Stand der Technik bekannten Nachteile zumindest teilweise umgeht bzw. vermeidet.

Das Problem wird gelöst durch eine Sensor-/Aktor-Anordnung sowie ein Verfahren zum Lokalisieren bzw. Leiten von beweglichen Objekten Gegenständen und/oder Personen auf einer Fläche mit Hilfe einer Sensor-/Aktor-Anordnung mit den Merkmalen gemäß den unabhängigen Patentansprüchen.

Beispielhafte Ausgestaltungen der Erfindung ergeben sich aus den abhängigen Patentansprüchen. Die weiteren Ausgestaltungen der Erfindung, die im Zusammenhang mit der Sensor-/Aktor-Anordnung beschrieben sind, gelten sinngemäß auch für das Verfahren.

Es wird eine Sensor-/Aktor-Anordnung bereitgestellt, welche mindestens ein Sensorelement und/oder mindestens ein Aktorelement aufweist. Ferner weist die Sensor-/Aktor-Anordnung mindestens eine Sende-/Empfangseinheit auf, welche mindestens eine Sende-/Empfangseinheit mindestens ein erstes Sende-/Empfangselement und ein zweites Sende-/Empfangselement zum Senden und/oder Empfangen von Signalen aufweist, wobei das erste Sende-/Empfangselement so eingerichtet ist, dass eine in dem ersten Sende-/Empfangselement enthaltene Kennungs-Information mittels eines ersten Kommunikationskanals drahtlos ausgelesen werden kann, und wobei das zweite Sende-/Empfangselement mit dem mindestens einen Sensorelement und/oder mit dem mindestens einen Aktorelement elektrisch gekoppelt ist, derart, dass mit Hilfe des zweiten Sende-/Empfangselementes ein von dem mindestens einen Sensorelement bereitgestelltes Sensorsignal mittels eines zweiten Kommunikationskanals gesendet werden kann und/oder ein mittels des zweiten Kommunikationskanals empfangenes Aktor-Steuersignal an dem mindestens einen Aktorelement bereitgestellt werden kann.

Bei einem Verfahren zum Lokalisieren bzw. Leiten von beweglichen Objekten und/oder Personen auf einer Fläche mit Hilfe einer Sensor-/Aktor-Anordnung wird eine Sensor-/Aktor-Anordnung bereitgestellt, mit einer Mehrzahl von Sensorelementen und/oder einer Mehrzahl von Aktorelementen, sowie mit einer Mehrzahl von zumindest teilweise miteinander und/oder mit der Mehrzahl von Sensorelementen und/oder mit der Mehrzahl von Aktorelementen elektrisch gekoppelten Sende-/Empfangseinheiten, wobei die Mehrzahl von Sensorelementen und/oder die Mehrzahl von Aktorelementen und/oder die Mehrzahl von Sende-/Empfangseinheiten an bzw. in der Fläche ausgebildet werden. Bei dem Verfahren werden mit Hilfe der Sensorelemente und/oder der Sende-/Empfangseinheiten Informationen über die Positionen von sich auf der Fläche befindlichen beweglichen Objekten und/oder Personen erfasst, welche Informationen zum Lokalisieren der Objekte und/oder Personen verwendet werden. Ferner werden mit Hilfe der Aktorelemente und/oder der Sende-/Empfangseinheiten den sich auf der Fläche befindlichen Objekten und/oder Personen Informationen bereitgestellt, welche Informationen zum Leiten der Objekte und/oder Personen auf der Fläche dienen.

Ein Aspekt der Erfindung kann darin gesehen werden, dass mit Hilfe der Sensor-/Aktor-Anordnung sowohl Objekte (wie zum Beispiel autonome Roboterfahrzeuge) als auch Personen lokalisiert werden können. Das Lokalisieren z.B. eines Roboters kann mittels Auslesens der in dem ersten Sende-/Empfangselement enthaltenen Kennungs-Information erfolgen, während das Lokalisieren einer Person dadurch erfolgen kann, dass ein von der Person ausgelöstes Sensorsignal von dem zweiten mit dem Sensorelement gekoppelten Sende-/Empfangselement als Drahtlos-Signal gesendet wird. Durch Verwenden eines ersten Kommunikationskanals, anders ausgedrückt eines ersten Übertragungsweges, für die Kommunikation des ersten Sende-/Empfangselementes und eines zweiten Kommunikationskanals (Übertragungsweges) für die Kommunikation des zweiten Sende-/Empfangselementes kann bei einem Lokalisations-Vorgang zwischen Objekten und Personen unterschieden werden.

Ein anderer Aspekt der Erfindung kann darin gesehen werden, dass mit Hilfe eines Aktorelementes, welches ein Aktor-Steuersignal erhält, einer Person Informationen bereitgestellt werden können, welche zum Beispiel für eine Orientierung der Person verwendet werden können.

Gemäß einer Ausgestaltung der Erfindung ist das erste Sende-/Empfangselement der mindestens einen Sende-/Empfangseinheit so eingerichtet, dass die in dem ersten Sende-/Empfangselement enthaltene Kennungs-Information mit Hilfe eines Drahtlos-Signals mit einer ersten Sende-/Empfangsfrequenz ausgelesen werden kann. Das Auslesen der Kennungs-Information erfolgt mittels des ersten Kommunikationskanals, welcher als Drahtlos-Kommunikationskanal, mit anderen Worten als drahtloser Übertragungsweg für Daten, Signale, Informationen etc., ausgebildet ist.

In einer anderen Ausgestaltung der Erfindung weist die mindestens eine Sende-/Empfangseinheit mindestens einen elektrischen Anschluss auf, wobei das zweite Sende-/Empfangselement der mindestens einen Sende-/Empfangseinheit mittels des mindestens einen elektrischen Anschlusses mit dem mindestens einen Sensorelement und/oder mit dem mindestens einen Aktorelement elektrisch gekoppelt ist.

Ein Aspekt der Erfindung kann darin gesehen werden, dass im Falle eines Sensorereignisses von dem Sensorelement ein Sensorsignal ausgelöst wird, welches Sensorsignal an dem mit dem Sensorelement gekoppelten zweiten Sende-/Empfangselement bereitgestellt wird.

Gemäß einer anderen Ausgestaltung der Erfindung ist das zweite Sende-/Empfangselement der mindestens einen Sende-/Empfangseinheit so eingerichtet, dass das von dem mindestens einen Sensorelement bereitgestellte Sensorsignal als Drahtlos-Signal mit einer zweiten Sende-/Empfangsfrequenz gesendet werden kann. Der zweite Kommunikationskanal ist in diesem Fall als Drahtlos-Kommunikationskanal, anders ausgedrückt als drahtloser Übertragungsweg für Daten, Signale, Informationen etc., ausgebildet.

In einer anderen Ausgestaltung der Erfindung ist es vorgesehen, dass das zweite Sende-/Empfangselement der mindestens einen Sende-/Empfangseinheit so eingerichtet ist, dass das Aktor-Steuersignal als Drahtlos-Signal mit einer dritten Sende-/Empfangsfrequenz empfangen werden kann.

Die erste Sende-/Empfangsfrequenz, die zweite Sende-/Empfangsfrequenz und die dritte Sende-/Empfangsfrequenz können paarweise verschieden sein. Anders ausgedrückt kann, falls die erste Sende-/Empfangsfrequenz mit f₁ bezeichnet wird, die zweite Sende-/Empfangsfrequenz mit f₂ und die dritte Sende-/Empfangsfrequenz mit f₃, gelten: fᵢ ≠ fⱼ (∀i,j; i,j ∈ {1,2,3}; i ≠ j).

Ein Vorteil bei der Verwendung unterschiedlicher Sende-/Empfangsfrequenzen f₁, f₂, f₃ für das Drahtlos-Signal zum Auslesen der Kennungs-Information, das Drahtlos-Signal zum Senden des Sensorsignals und das als Aktor-Steuersignal ausgebildete Drahtlos-Signal kann darin gesehen werden, dass sich die Signale nicht gegenseitig beeinflussen bzw. stören.

In einer alternativen Ausgestaltung der Erfindung können zwei oder alle drei der drei Sende-/Empfangsfrequenzen f₁, f₂, f₃ denselben oder im Wesentlichen denselben Wert aufweisen. Zum Beispiel können die zweite Sende-/Empfangsfrequenz f₂ (d.h. die Frequenz des von dem zweiten Sende-/Empfangselement gesendeten Drahtlos-Signals) und die dritte Sende-/Empfangsfrequenz f₃ (d.h. die Frequenz des von dem zweiten Sende-/Empfangselement empfangenen Aktor-Steuersignals) identisch sein, i.e. f₂ = f₃.

Gemäß einer anderen Ausgestaltung der Erfindung ist es vorgesehen, dass der zweite Kommunikationskanal als eine drahtgebundene Verbindung, anders ausgedrückt als drahtgebundener Übertragungsweg für Daten, Signale, Informationen etc., ausgebildet ist. In diesem Fall kann das von dem mindestens einen Sensorelement bereitgestellte Sensorsignal von dem zweiten Sende-/Empfangselement als drahtgebundenes Signal gesendet werden und/oder das Aktor-Steuersignal von dem zweiten Sende-/Empfangselement als drahtgebundenes Signal empfangen werden.

Ein als drahtgebundene Verbindung ausgebildeter zweiter Kommunikationskanal kann beispielsweise durch mindestens eine mit der mindestens einen Sende-/Empfangseinheit, bzw. dem zweiten Sende-/Empfangselement der mindestens einen Sende-/Empfangseinheit, gekoppelte Stromversorgungsleitung bzw. Spannungsversorgungsleitung realisiert werden. Anders ausgedrückt kann die Datenübertragung bzw. Signalübertragung, d.h. die Übertragung des Sensorsignals und/oder des Aktor-Steuersignals, mit Hilfe eines PLC-Verfahrens (Powerline Communication) erfolgen.

Ein Vorteil bei der Verwendung eines PLC-Verfahrens zum Übertragen der Signale (Sensorsignal und/oder Aktor-Steuersignal) von dem zweiten Sende-/Empfangselement bzw. an das zweite Sende-/Empfangselement kann darin gesehen werden, dass eine oder mehrere für die Stromversorgung bzw. Spannungsversorgung der mindestens einen Sende-/Empfangseinheit bereitgestellte Stromleitungen bzw. Spannungsleitungen für die Signalübertragung mitgenutzt werden können und daher zum Beispiel keine zusätzlichen Signalleitungen für die Signalübertragung bereitgestellt werden müssen.

Alternativ kann die Übertragung des Sensorsignals und/oder des Aktor-Steuersignals unter Verwendung eines optischen Übertragungswegs bzw. einer optischen Datenübertragungs-Einrichtung erfolgen, zum Beispiel unter Verwendung von Glasfasern bzw. Glasfaserkabeln.

Gemäß einer anderen Ausgestaltung der Erfindung ist mindestens eines der Sende-/Empfangselemente als Radio-Frequenz-Element (RF-Element) ausgebildet (auch als RF-Modul bezeichnet), d.h. als Sende-/Empfangselement, welches eine Sende-/Empfangsfrequenz im Radiofrequenz-Bereich aufweist.

In einer anderen Ausgestaltung der Erfindung ist es vorgesehen, dass das erste Sende-/Empfangselement als RF-Element, beispielsweise als passives RF-Element, ausgebildet ist. Ein als passives RF-Element ausgebildetes erstes Sende-/Empfangselement kann ohne Anliegen einer Versorgungsspannung an der Sende-/Empfangseinheit funktionsfähig sein. In diesem Fall kann das als passives RF-Element ausgebildete erste Sende-/Empfangselement die für seinen Betrieb notwendige Energie beispielsweise aus dem Drahtlos-Signal bzw. Funksignal (d.h. dem elektromagnetischen Feld des Funksignals) beziehen, welches Drahtlos-Signal zum Auslesen der in dem ersten Sende-/Empfangselement enthaltenen Kennungs-Information verwendet wird.

Das erste Sende-/Empfangselement kann beispielsweise als RFID-Tag (Radio Frequency Identification Tag) ausgebildet sein, zum Beispiel als passiver RFID-Tag.

In einer anderen Ausgestaltung der Erfindung ist es vorgesehen, dass die in dem ersten Sende-/Empfangselement (z.B. dem RFID-Tag) enthaltene Kennungs-Information als eine für die mindestens eine Sende-/Empfangseinheit eindeutige Kennungs-Information ausgebildet ist. Die eindeutige Kennungs-Information kann in Form einer einzigartigen (eindeutigen) Nummer realisiert werden, welche Nummer bereits bei der Fertigung des ersten Sende-/Empfangselementes festgelegt werden kann und welche Nummer zur Lokalisation z.B. von einem Roboterfahrzeug (welches eine geeignete Lesevorrichtung aufweist) ausgelesen werden kann.

Gemäß einer anderen Ausgestaltung der Erfindung ist es vorgesehen, dass das als RF-Element (beispielsweise als RFID-Tag) ausgebildete erste Sende-/Empfangselement beschreibbar ist, zum Beispiel mit Hilfe einer Schreib/Lese-Einrichtung bzw. eines Schreib-/Lesegeräts. Mit anderen Worten kann das erste Sende-/Empfangselement (z.B. der RFID-Tag) mit Informationen bzw. Daten beschrieben werden wie z.B. einer oder mehreren Koordinaten (Koordinaten-Angaben), einer Etagennummer, einem Service-Datum etc. Noch anders ausgedrückt kann das erste Sende-/Empfangselement als programmierbares Element (z.B. programmierbarer RFID-Tag) ausgebildet sein.

Gemäß einer anderen Ausgestaltung der Erfindung ist das zweite Sende-/Empfangselement ebenfalls als RF-Element ausgebildet.

In einer anderen Ausgestaltung der Erfindung ist es vorgesehen, dass ein als RF-Element ausgebildetes zweites Sende-/Empfangselement eine von der ersten Sende-/Empfangsfrequenz f₁ verschiedene zweite Sende-/Empfangsfrequenz f₂ (zum Senden des Sensorsignals) bzw. dritte Sende-/Empfangsfrequenz f₃ (zum Empfangen des Aktor-Steuersignals) aufweist. Mit anderen Worten gilt f₂ ≠ f₁ und f₃ ≠ f₁.

Ferner kann die zweite Sende-/Empfangsfrequenz f₂, d.h. die Frequenz, mit der ein von einem Sensorelement bereitgestelltes Sensorsignal von einem mit dem Sensorelement gekoppelten zweiten Sende-/Empfangselement als Drahtlos-Signal gesendet wird, gleich der dritten Sende-/Empfangsfrequenz f₃ sein, d.h. gleich der Frequenz eines Aktor-Steuersignals, welches von einem mit einem Aktorelement gekoppelten zweiten Sende-/Empfangselement empfangen wird.

Gemäß einer anderen Ausgestaltung der Erfindung weist die mindestens eine Sende-/Empfangseinheit eines oder mehrere der folgenden Elemente auf: ein Prozessor-Element (Central Processing Unit, CPU), ein Speicherelement wie z.B. ein Flash-Speicherelement und/oder ein RAM-Speicherelement (Random Access Memory), ein Zeitgeber-Element bzw. einen Timer.

In einer anderen Ausgestaltung der Erfindung ist es vorgesehen, dass die mindestens eine Sende-/Empfangseinheit der Sensor-/Aktor-Anordnung mittels mindestens eines elektrischen Versorgungsspannungs-Anschlusses mit einer elektrischen Versorgungsspannung gekoppelt ist. Mit Hilfe der Versorgungsspannung kann die für den Betrieb der mindestens einen Sende-/Empfangseinheit (bzw. der in der mindestens einen Sende-/Empfangseinheit ausgebildeten Elemente/Komponenten) sowie für den Betrieb des mindestens einen Sensorelementes und/oder des mindestens einen Aktorelementes, welches mit dem zweiten Sende-/Empfangselement der mindestens einen Sende-/Empfangseinheit elektrisch gekoppelt ist, erforderliche Energie zur Verfügung gestellt werden. Falls die mindestens eine Sende-/Empfangseinheit mittels mehrerer Anschlüsse mit der Versorgungsspannung verbunden ist, so können durch die damit erzielte Redundanz Ausfälle der mindestens einen Sende-/Empfangseinheit entweder ganz vermieden oder zumindest die Wahrscheinlichkeit solcher Ausfälle deutlich reduziert werden.

Gemäß einer anderen Ausgestaltung der Erfindung weist die mindestens eine Sende-/Empfangseinheit mindestens ein Schaltelement auf, welches mindestens eine Schaltelement mit dem mindestens einen elektrischen Versorgungsspannungs-Anschluss elektrisch gekoppelt ist. Mit anderen Worten ist an dem mindestens einen Versorgungsspannungs-Anschluss mindestens ein Schaltelement eingefügt. Das mindestens eine Schaltelement kann als elektronischer Schalter ausgebildet sein, welcher so eingerichtet ist, dass im Falle eines elektrischen Kurzschlusses in der Sensor-/Aktor-Anordnung der betreffende Versorgungszweig (Versorgungsspannungszweig) mit Hilfe des Schalters abgeschaltet wird. Das Schaltelement wird daher auch als Power Switch bezeichnet. Mit Hilfe des Schaltelementes (Power Switches) kann die mindestens eine Sende-/Empfangseinheit bzw. die in der mindestens einen Sende-/Empfangseinheit ausgebildeten Elemente vor den negativen Auswirkungen eines Kurzschlusses (zum Beispiel Schädigung der Elemente durch hohen Strom) geschützt werden, indem anschaulich die Versorgungszweige, an denen ein Kurzschluss auftritt, von der Sende-/Empfangseinheit abgekoppelt werden.

Gemäß einer anderen Ausgestaltung der Erfindung weist die Sensor-/Aktor-Anordnung mindestens ein Sensorelement auf, wobei das mindestens eine Sensorelement als Näherungssensor (z.B. als kapazitiver Näherungssensor) und/oder als Temperatursensor und/oder als Drucksensor und/oder als optischer Sensor und/oder als akustischer Sensor ausgebildet sein kann. Alternativ kann das mindestens eine Sensorelement aber auch als ein anderer Typ von Sensor ausgebildet sein.

In einer anderen Ausgestaltung der Erfindung ist es vorgesehen, dass die Sensor-/Aktor-Anordnung mindestens ein Aktorelement (auch Aktuatorelement genannt) aufweist, wobei das mindestens eine Aktorelement als Anzeigeelement wie beispielsweise eine Leuchtdiode (Light Emitting Diode, LED) ausgebildet sein kann.

Alternativ kann das mindestens eine Aktorelement aber auch als ein anderes Anzeigeelement bzw. bildgebendes Element wie z.B. als Flüssigkristall-Anzeigeeinheit (Liquid Crystal Display, LCD) und/oder als ein Schallwellen-Erzeugungselement (z.B. Lautsprecher) und/oder als ein Vibrations-Erzeugungselement ausgebildet sein.

Gemäß einer anderen Ausgestaltung der Erfindung weist die Sensor-/Aktor-Anordnung eine Mehrzahl von Sensorelementen und/oder eine Mehrzahl von Aktorelementen auf, sowie eine Mehrzahl von zumindest teilweise miteinander und/oder mit der Mehrzahl von Sensorelementen und/oder mit der Mehrzahl von Aktorelementen elektrisch gekoppelten Sende-/Empfangseinheiten, wobei die Mehrzahl von Sensorelementen und/oder die Mehrzahl von Aktorelementen und/oder die Mehrzahl von Sende-/Empfangseinheiten an bzw. in einer Fläche (bzw. einem Flächengebilde) ausgebildet sind.

Bei der Fläche kann es sich um eine Bodenfläche handeln; zum Beispiel kann die Fläche Bestandteil eines begehbaren und/oder befahrbaren Bodenbelags sein, allgemein eines Bodenbelags, auf welchem sich bewegliche bzw. bewegbare Objekte und/oder Personen bewegen können, wie zum Beispiel ein Teppich oder ein Parkett/Laminat. Alternativ kann es sich bei der Fläche um eine Wandfläche handeln, allgemein um eine beliebige Fläche bzw. ein beliebiges Flächengebilde.

Eine Sensor-/Aktor-Anordnung mit einer Mehrzahl von Sensorelementen und/oder einer Mehrzahl von Aktorelementen sowie einer Mehrzahl von Sende-/Empfangseinheiten, welche Sende-/Empfangseinheiten zumindest teilweise miteinander und/oder mit der Mehrzahl von Sensorelementen und/oder mit der Mehrzahl von Aktorelementen elektrisch gekoppelt sind, ist anschaulich als ein Netzwerk von zumindest teilweise miteinander gekoppelten, anders ausgedrückt vernetzten, Sende-/Empfangseinheiten ausgebildet, wobei die Sende-/Empfangseinheiten außerdem zumindest teilweise mit der Mehrzahl von Sensorelementen und/oder mit der Mehrzahl von Aktorelementen gekoppelt bzw. vernetzt sind. Die Sensor-/Aktor-Anordnung wird daher im Folgenden auch als Sensor-/Aktor-Netzwerk oder kurz Netzwerk bezeichnet, und die Sende-/Empfangseinheiten dieses Netzwerks werden im Folgenden auch als Netzwerkelemente bezeichnet.

Die Netzwerkelemente können mit Hilfe von leitfähigen Bahnen bzw. Leiterbahnen (oder mit Hilfe von beliebigen anderen elektrisch leitfähigen Elementen) miteinander und/oder mit den Sensorelementen und/oder mit den Aktorelementen und/oder mit der Versorgungsspannung verbunden sein. Die leitfähigen Bahnen (bzw. die elektrisch leitfähigen Elemente) können in die Fläche eingebracht bzw. integriert sein, bei einer als Teppich (allgemein Textilstruktur) ausgebildeten Fläche können die elektrisch leitfähigen Bahnen beispielsweise in den Teppich (die Textilstruktur) eingewoben sein.

In einer anderen Ausgestaltung der Erfindung ist es vorgesehen, dass die Mehrzahl von Sensorelementen und/oder die Mehrzahl von Aktorelementen und/oder die Mehrzahl von Sende-/Empfangseinheiten in einer Flächenverkleidung der Fläche ausgebildet sind. Anders ausgedrückt können die Mehrzahl von Sensorelementen und/oder die Mehrzahl von Aktorelementen und/oder die Mehrzahl von Sende-/Empfangseinheiten in einer Verkleidung bzw. in einer Flächenverkleidungsstruktur der Fläche ausgebildet, zum Beispiel eingebettet, sein.

Die Flächenverkleidungsstruktur kann beispielsweise als Wand-Verkleidungsstruktur (Wandverkleidung) einer Wandfläche, als Boden-Verkleidungsstruktur (Bodenverkleidung) einer Bodenfläche oder als Decken-Verkleidungsstruktur (Deckenverkleidung) einer Deckenfläche ausgebildet sein. Alternativ kann die Flächenverkleidungsstruktur als Verkleidung einer beliebigen Fläche bzw. eines beliebigen Flächengebildes ausgebildet sein.

Gemäß einer anderen Ausgestaltung der Erfindung ist es vorgesehen, dass die Mehrzahl von Sensorelementen und/oder die Mehrzahl von Aktorelementen und/oder die Mehrzahl von Sende-/Empfangseinheiten (Netzwerkelementen) auf der Unterseite einer Bodenverkleidung und/oder auf der Unterseite einer Wandverkleidung und/oder auf der Unterseite einer Deckenverkleidung ausgebildet sind. Unter der Unterseite einer Bodenverkleidung, Wandverkleidung oder Deckenverkleidung ist dabei die einem Betrachter der Verkleidungsstruktur abgewandte, anders ausgedrückt: nicht sichtbare, Seite der Verkleidungsstruktur, anschaulich die Rückseite der Verkleidungsstruktur, zu verstehen. Ein Vorteil des Ausbildens der Mehrzahl von Sensorelementen und/oder der Mehrzahl von Aktorelementen und/oder der Mehrzahl von Sende-/Empfangseinheiten auf der Unterseite der Flächenverkleidungsstruktur kann darin gesehen werden, dass der optische Eindruck der Fläche nicht durch die Sensorelemente und/oder Aktorelemente und/oder Sende-/Empfangseinheiten beeinträchtigt wird.

Gemäß einer anderen Ausgestaltung der Erfindung ist jede Sende-/Empfangseinheit bzw. jedes Netzwerkelement des Sensor-/Aktor-Netzwerkes mittels mindestens zweier Versorgungsspannungs-Anschlüsse mit der elektrischen Versorgungsspannung gekoppelt.

An jedem Anschluss für die Versorgungsspannung kann ein Schaltelement (Power Switch) eingefügt sein, das im Falle eines Kurzschlusses in dem Netzwerk den betreffenden Versorgungszweig automatisch abschaltet. Dadurch kann selbst bei einem auftretenden elektrischen Kurzschluss innerhalb des Netzwerkes mit eventuell einer Vielzahl von einzelnen miteinander gekoppelten Netzwerkelementen, Sensorelementen und/oder Aktorelementen ein Ausfall des gesamten Netzwerkes vermieden werden. Anders ausgedrückt kann durch ein so genanntes Power-Routing verhindert werden, dass ein Kurzschluss im Netzwerk die Versorgungsspannung an allen Netzwerkelementen nach unten zieht.

Gemäß einer anderen Ausgestaltung der Erfindung weist die Versorgungsspannung im Sensor-/Aktor-Netzwerk einen Wert auf, welcher über dem für eine einzelne Sende-/Empfangseinheit (Netzwerkelement) notwendigen Versorgungsspannungswert liegt. Dadurch können Übertragungsverluste im Netzwerk gering gehalten werden und somit eine sichere Funktion des Netzwerkes bzw. der Netzwerkelemente gewährleistet werden. Eines oder mehrere der Netzwerkelemente kann daher einen Spannungsregler aufweisen, mit dessen Hilfe die Spannung auf den für das Netzwerkelement geeigneten Wert heruntergeregelt werden kann.

In einer anderen Ausgestaltung der Erfindung ist es vorgesehen, dass die Mehrzahl von Sensorelementen und/oder die Mehrzahl von Aktorelementen und/oder die Mehrzahl von Sende-/Empfangseinheiten (Netzwerkelementen) in einem regelmäßigen Raster angeordnet sind, zum Beispiel in einem regelmäßigen Rechteck-Raster oder in einem quadratischen Raster oder in einem Dreiecks-Raster.

Jedes Netzwerkelement des Sensor-/Aktor-Netzwerkes kann beispielsweise mit allen unmittelbar benachbarten Netzwerkelementen elektrisch gekoppelt sein (z.B. mit Hilfe von Versorgungsspannungs-Leitungen), d.h. bei einem regelmäßigen Rechteck-Raster oder bei einem quadratischen Raster mit jeweils vier benachbarten Netzwerkelementen.

Gemäß einer anderen Ausgestaltung der Erfindung ist es vorgesehen, dass dieSensor-/Aktor-Anordnung bzw. das Sensor-/Aktor-Netzwerk mindestens eine Sende-/Empfangs-Einrichtung aufweist, welche Sende-/Empfangs-Einrichtung eingerichtet ist zum Drahtlos-Kommunizieren mit mindestens einem der zweiten Sende-/Empfangselemente der Mehrzahl von Sende-/Empfangseinheiten (Netzwerkelementen) und/oder mit mindestens einem auf der Fläche befindlichen beweglichen Objekt.

Die mindestens eine Sende-/Empfangs-Einrichtung kann als lokale Sende-/Empfangs-Einrichtung eingerichtet sein, d.h. dass die Sende-/Empfangs-Einrichtung nur mit den zweiten Sende-/Empfangs-Elementen derjenigen Netzwerkelemente kommuniziert, welche Netzwerkelemente sich in der Nähe, d.h. beispielsweise innerhalb einer kugelförmigen Umgebung mit einem vorgegebenen Radius, der Sende-/Empfangs-Einrichtung befinden. Analog kann eine Kommunikation zwischen einem auf der Fläche befindlichen beweglichen Objekt (z.B. einem Roboterfahrzeug) und einer lokalen Sende-/EmpfangsEinrichtung ausschließlich dann erfolgen, wenn sich das Objekt in der Nähe der lokalen Sende-/Empfangs-Einrichtung befindet, d.h. wenn der Abstand zwischen dem Objekt und der lokalen Sende-/Empfangs-Einrichtung einen vorgegebenen Wert unterschreitet.

Anschaulich erfolgt eine Kommunikation zwischen einer lokalen Sende-/Empfangs-Einrichtung und einem zweiten Sende-/Empfangs-Element eines Netzwerkelementes und/oder zwischen der lokalen Sende-/Empfangs-Einrichtung und einem beweglichen Objekt nur dann, wenn sich das zweite Sende-/Empfangs-Element bzw. das bewegliche Objekt innerhalb des Empfangsbereiches der lokalen Sende-/Empfangs-Einrichtung befinden.

Es ist anzumerken, dass die mindestens eine Sende-/EmpfangsEinrichtung an einem beliebigen Ort, welcher eine im Wesentlichen ungestörte Kommunikation mit einem zweiten Sende-/Empfangselement oder mit einer Mehrzahl der zweiten Sende-/Empfangselemente oder mit allen zweiten Sende-/Empfangselementen einer Sensor-/Aktor-Anordnung gewährleistet, ausgebildet sein kann. Insbesondere ist es im Falle eines in eine Flächenverkleidung integrierten Sensor-/Aktor-Netzwerkes nicht erforderlich, dass die Sende-/Empfangs-Einrichtung ebenfalls in der Flächenverkleidung ausgebildet ist.

Bei der Kommunikation zwischen der mindestens einen Sende-/Empfangs-Einrichtung und einem als RF-Element ausgebildeten zweiten Sende-/Empfangselement einer Sende-/Empfangseinheit bzw. eines Netzwerkelementes, welches zweite Sende-/Empfangselement mit einem Sensorelement und/oder mit einem Aktorelement gekoppelt ist, kann das zweite Sende-/Empfangselement Sensorereignisse an die mindestens eine Sende-/EmpfangsEinrichtung (als Drahtlos-Signal mit der zweiten Sende-/Empfangsfrequenz) weiterleiten bzw. von der mindestens einen Sende-/Empfangs-Einrichtung Befehle zum Aktivieren des Aktorelementes (Aktuators) als Drahtlos-Signal mit der dritten Sende-/Empfangsfrequenz empfangen. Das als RF-Element ausgebildete zweite Sende-/Empfangselement kann somit drahtlos mit mindestens einer im Sendebereich des RF-Elementes angebrachten Sende-/Empfangs-Einrichtung kommunizieren.

Die Sensor-/Aktor-Anordnung kann alternativ so eingerichtet sein, dass eine Sende-/Empfangs-Einrichtung mit einem gegebenen zweiten Sende-/Empfangselement kommuniziert, welches wiederum mit einem Teil oder mit allen der anderen zweiten Sende-/Empfangselemente der Sensor-/Aktoranordnung kommuniziert. In diesem Fall kann das zweite Sende-/Empfangselement, welches mit der Sende-/Empfangs-Einrichtung kommuniziert, anschaulich als Master-Element bezeichnet werden.

Gemäß einer anderen Ausgestaltung der Erfindung weist die Sensor-/Aktor-Anordnung bzw. das Sensor-/Aktor-Netzwerk mindestens eine Steuer-Einrichtung auf, welche Steuer-Einrichtung eingerichtet ist zum Kommunizieren mit der mindestens einen Sende-/Empfangs-Einrichtung und/oder mit dem mindestens einen auf der Fläche befindlichen beweglichen Objekt.

Die mindestens eine Steuer-Einrichtung kann als eine zentrale Steuer-Einrichtung ausgebildet sein, z.B. als ein zentraler Arbeitsplatzrechner wie z.B. ein PC (Personal Computer) oder eine Workstation.

Alternativ kann die mindestens eine Steuer-Einrichtung auch in dem mindestens einen beweglichen Objekt, z.B. in einem autonomen Roboterfahrzeug, ausgebildet sein.

Die Kommunikation der Steuer-Einrichtung mit der mindestens einen Sende-/Empfangs-Einrichtung und/oder mit dem mindestens einen auf der Fläche befindlichen beweglichen Objekt kann mittels eines Drahtlos-Kommunikationskanals erfolgen, z.B. unter Verwendung eines Bluetooth-Übertragungs-Standards oder eines WLAN-Übertragungs-Standards (Wireless Local Area Network).

Alternativ, zum Beispiel bei einer als zentrale Recheneinrichtung bzw. zentraler Arbeitsplatzrechner ausgebildeten Steuer-Einrichtung, kann die Kommunikation zwischen der mindestens einen Steuer-Einrichtung und der mindestens einen Sende-/Empfangs-Einrichtung drahtgebunden erfolgen, zum Beispiel mittels Powerline Communication (PLC), unter Verwendung eines EIB-Standards (European Installation Bus) oder unter Verwendung eines LAN-Bus-Standards (Local Area Network).

Die Kommunikation zwischen der mindestens einen Steuer-Einrichtung und der mindestens einen Sende-/EmpfangsEinrichtung kann alternativ unter Verwendung eines optischen Datenübertragungs-Weges bzw. einer optischen Datenübertragungs-Einrichtung erfolgen, zum Beispiel unter Verwendung von Glasfasern bzw. Glasfaserkabeln.

Die Sensor-/Aktor-Anordnung bzw. das Sensor-/Aktor-Netzwerk kann so eingerichtet sein, dass mit Hilfe der Sensorelemente und/oder der Sende-/Empfangseinheiten Informationen über die Positionen von sich auf der Fläche befindlichen beweglichen Objekten und/oder Personen erfasst und/oder bereitgestellt werden können, welche Informationen zum Lokalisieren der Objekte und/oder Personen dienen; und/oder dass mit Hilfe der Aktorelemente und/oder der Sende-/Empfangseinheiten den sich auf der Fläche befindlichen Objekten und/oder Personen Informationen bereitgestellt werden können, welche Informationen zum Leiten der Objekte und/oder Personen auf der Fläche dienen.

Ein Aspekt der Erfindung kann darin gesehen werden, dass auf einer beliebigen Fläche eine Möglichkeit zur Ortsbestimmung bereitgestellt wird, um zum Beispiel bewegliche Gegenstände (Objekte), Fahrzeuge und/oder Personen zu lokalisieren (anders ausgedrückt, die Positionen der Objekte, Fahrzeuge bzw. Personen auf der Fläche zu bestimmen) und eine Navigation mit Hilfe einer zentralen oder lokalen Steuer-Einrichtung zu ermöglichen. Dazu kann auf der Fläche, zum Beispiel auf der Unterseite einer Bodenverkleidung und/oder einer Wandverkleidung, ein Sensor-/Aktor-Netzwerk, i.e. ein Netzwerk aus zumindest teilweise miteinander und mit Sensorelementen und/oder Aktorelementen gekoppelten Netzwerkelementen, angebracht werden. Die Netzwerkelemente können mit Hilfe leitfähiger Bahnen miteinander und mit einer Versorgungsspannung verbunden sein. Kurzschlüsse in dem Netzwerk können mit Hilfe eines Power-Routing-Verfahrens, wie es z.B. in [2] beschrieben ist, vermieden werden. Liegt z.B. an einem Netzwerkelement oder an mehreren Netzwerkelementen eine Versorgungsspannung an, so können die Versorgungsspannungsanschlüsse jedes Netzwerkelementes jeweils mit Hilfe eines internen Prozessors des jeweiligen Netzwerkelementes auf Kurzschlüsse getestet werden. Die Anschlüsse, welche keinen Kurzschluss zeigen, können niederohmig an das Netzwerkelement angeschlossen werden, und Anschlüsse mit Kurzschlüssen können elektronisch abgeschaltet werden, zum Beispiel unter Verwendung von Schaltelementen (elektronischen Schaltern bzw. Power Switches). Die Netzwerkelemente des Netzwerks können so sukzessive auf Kurzschlüsse geprüft werden, wobei nacheinander für jedes einzelne Netzwerkelement die fehlerfreien Anschlüsse (d.h. die Anschlüsse, die keinen Kurzschluss aufweisen) niederohmig an das Netzwerkelement angeschlossen werden können und fehlerbehaftete Anschlüsse (d.h. Anschlüsse mit Kurzschlüssen) abgeschaltet (abgekoppelt) werden können.

Mit anderen Worten können beim Anlegen einer Versorgungsspannung an die Flächenverkleidungsstruktur mit Hilfe des oben beschriebenen Power-Routing-Verfahrens automatisch Kurzschlüsse im Netzwerk lokalisiert werden (d.h. es können die Positionen der Netzwerkelemente bzw. der Anschlüsse, an welchen Netzwerkelementen bzw. Anschlüssen Kurzschlüsse auftreten), ermittelt werden, und die im Netzwerk auftretenden Kurzschlüsse können automatisch unter Verwendung elektronischer Schalter (Schaltelemente) eliminiert werden.

Ein anderer Aspekt der Erfindung kann darin gesehen werden, dass jedes Netzwerkelement mindestens ein erstes Sende-/Empfangselement und ein zweites Sende-/Empfangselement aufweist, von denen eines oder beide als RF-Elemente zum drahtlosen Senden bzw. Empfangen von Signalen (Daten) eingerichtet sein können. Mit anderen Worten können von dem ersten Sende-/Empfangselement und/oder von dem zweiten Sende-/Empfangselement gesendete (übermittelte) bzw. empfangene Daten drahtlos übermittelt werden, z.B. an eine im Sendebereich des jeweiligen Sende-/Empfangselementes angeordnete lokale Sende-/Empfangs-Einrichtung.

Die Netzwerkelemente können in einem regelmäßigen Raster angeordnet sein und können mit verschiedenen Sensoren wie z.B. Näherungssensoren, Temperatursensoren, Drucksensoren usw. und/oder mit Aktoren (Aktuatoren) wie z.B. Leuchtdioden (LEDs) elektrisch gekoppelt sein. In der Fläche angeordnete Aktorelemente (Aktuatoren) wie z.B. LEDs können dabei von einer zentralen Steuer-Einrichtung aus einzeln oder in Gruppen aktiviert werden. Die Erfindung ermöglicht es somit zum Beispiel, großflächige Sensorsysteme und/oder Displaysysteme bereitzustellen.

Ein anderer Aspekt der Erfindung kann darin gesehen werden, dass mit Hilfe der Sensor-/Aktor-Anordnung bzw. des Sensor-/Aktor-Netzwerkes in einer Umgebung, in der sich mehrere bewegliche Geräte (Objekte) und/oder Personen befinden, eine verbesserte Hindernisvermeidung erreicht werden kann. Durch die Kombination mit dem aktiven Sensorsystem kann zum Beispiel eine Person oder ein Fahrzeug, das um eine Gebäudeecke herum kommt, bereits vom System derart berücksichtigt werden, dass entgegenkommende Fahrzeuge abgebremst werden können, ohne dass ein Sichtkontakt bestehen muss.

Mit anderen Worten kann zum Beispiel eine Person, welche sich beispielsweise auf einer mit einer Sensor-/Aktor-Anordnung versehenen Fläche eines ersten Korridors entlang bewegt, lokalisiert und die Bewegung der Person verfolgt werden (Tracking), indem die von der Person an einzelnen Sensorelementen der Fläche ausgelösten Sensorereignisse (insbesondere die räumliche und zeitliche Abfolge der Sensorereignisse), welche durch mit den Sensorelementen gekoppelte zweite Sende-/Empfangselemente z.B. drahtlos an lokale Sende-/Empfangs-Einrichtungen übermittelt und von dort an eine zentrale Steuer-Einrichtung (drahtlos oder drahtgebunden) weitergeleitet werden, von der zentralen Steuer-Einrichtung ausgewertet werden. Gleichzeitig kann für ein autonomes Roboterfahrzeug in einem zweiten, den ersten Korridor kreuzenden Korridor, welches sich mit Hilfe von Drahtlos-Kommunikation mit den ersten Sende-/Empfangselementen der Sende-/Empfangseinheiten und/oder den lokalen Sende-/Empfangs-Einrichtungen und/oder der zentralen Steuer-Einrichtung an bzw. auf der Fläche orientiert, dessen Trajektorie auf der Fläche des zweiten Korridors verfolgt und anhand der Bewegungsparameter des Fahrzeugs (z.B. Geschwindigkeitsvektor, Beschleunigungsvektor) extrapoliert werden. Falls sich die für das Roboterfahrzeug vorausberechnete Bahn mit einer für die sich in dem ersten Korridor befindliche Person vorausberechneten Bahn überschneidet ("Kollisionskurs"), so kann das Roboterfahrzeug durch Übermittlung geeigneter Steuersignale rechtzeitig abgebremst werden und eine eventuelle Kollision mit der Person vermieden werden.

In ähnlicher Weise können die Positionen bzw. Bewegungen von zwei oder mehr beweglichen Objekten (z.B. Roboterfahrzeugen) auf der Fläche verfolgt werden, und bei Bedarf durch Übermitteln geeigneter Steuersignale an eines oder mehrere der Objekte Kollisionen vermieden werden.

Die Erfindung kann beispielsweise vorteilhaft verwendet werden bei der Lokalisierung von Putzrobotern oder Transportfahrzeugen, in Kundenzählsystemen oder Kundenleitsystemen z.B. in Supermärkten, Flughäfen, Krankenhäusern, oder allgemein in öffentlichen oder privaten Gebäuden. Weitere Anwendungsbeispiele sind Tracking (d.h. Verfolgen) von Personen, zum Beispiel für Sicherheitsbereiche, als Einbruchsalarm oder zur Gebäudeautomation, sowie Leuchtanzeigen im Boden zur Anzeige von Notausgängen oder zu Reklamezwecken.

Anders ausgedrückt kann ein Aspekt der Erfindung darin gesehen werden, dass eine als Sensor-/Aktor-Netzwerk ausgebildete Sensor-/Aktor-Anordnung eine Mehrzahl von Sende-/Empfangseinheiten bzw. Netzwerkelementen aufweist, welche Netzwerkelemente in einem regelmäßigen Raster in einer Flächenverkleidungsstruktur integriert sein können. Die Netzwerkelemente können mittels Leiterbahnen oder beliebigen anderen elektrisch leitfähigen Elementen miteinander verbunden sein und können ferner mit einer Versorgungsspannung gekoppelt sein. Dies hat zum Beispiel den Vorteil, dass die Netzwerkelemente wartungsfrei betrieben werden können und für verschiedenste Sensoren und Aktoren (Aktuatoren) genügend Leistung zur Verfügung steht. Die Datenkommunikation zu lokalen Sende-/Empfangs-Einrichtungen oder zu einer zentralen Steuer-Einrichtung (z.B. zentraler PC) oder zu autonomen Roboterfahrzeugen kann drahtlos erfolgen, beispielsweise unter Verwendung von mindestens zwei unterschiedlichen Sende-/Empfangs-Frequenzen. Dadurch kann unterschieden werden, ob Personen die Sensoren ausgelöst haben, oder ob Roboterfahrzeuge sich mittels der integrierten Sende-/Empfangselemente (RF-Elemente) lokalisieren. Die Netzwerkelemente (bzw. ein jeweiliges erstes Sende-/Empfangselement und/oder zweites Sende-/Empfangselement) können eine einzigartige Identifikations-Nummer aufweisen, welche Identifikations-Nummer bei der Installation des Systems (d.h. der Sensor-/Aktor-Anordnung) einmalig in eine Kartisierung übernommen werden kann. Das System kann außerdem einen implementierten ebenfalls drahtlos initiierbaren Selbsttest aufweisen. Eine erste Sende-/Empfangsfrequenz kann zur Kommunikation von autonomen Fahrzeugen und/oder beweglichen Gegenständen mit den Netzwerkelementen verwendet werden. Eine zweite Sende-/Empfangsfrequenz kann zur Kommunikation zwischen den Netzwerkelementen und den lokalen Sende-/Empfangs-Einrichtungen zur Übermittlung der Sensorereignisse (Sensorsignale) und der Aktor-Steuersignale verwendet werden.
Alternativ kann für die Übermittlung der Aktor-Steuersignale eine dritte Seride-/Empfangsfrequenz verwendet werden. Eine vierte Sende-/Empfangsfrequenz kann für die Kommunikation zwischen lokalen Sende-/Empfangs-Einrichtungen und den autonomen Fahrzeugen bzw. der zentralen Steuer-Einrichtung verwendet werden.

Gemäß einer anderen Ausgestaltung der Erfindung wird die Funktion des mindestens einen ersten Sende-/Empfangselements der mindestens einen Sende-/Empfangseinheit durch das zweite Sende-/Empfangselement mit übernommen. Dazu sendet das zweite Sende-/Empfangselement seine Identifikations-Nummer (d.h., seine eindeutige Kennungs-Information) drahtlos aus, beispielsweise in regelmäßigen Zeitabständen. Die Sendeleistung dieses regelmäßigen Signals (auch als "Ping" bezeichnet) kann dabei so gewählt sein/werden, dass dieses Signal nur in unmittelbarer Nähe der Sende-/Empfangseinheit von einer geeigneten Lese-Einrichtung ausgelesen werden kann. Aus den an dieser Lese-Einrichtung eintreffenden Pings kann mittels eines sogenannten Triangulations-Verfahrens die genaue Position der Lese-Einrichtung berechnet werden. Zusammen mit dem Senden der Identifikations-Nummer kann das zweite Sende-/Empfangselement eine zusätzliche Kennungs-Information bzw. eine zusätzliche Kennung aussenden. Mit Hilfe der zusätzlichen Kennung, die zusätzlich mit den Pings versendet wird, können die zur Lokalisierung benutzten Pings von anderen Nachrichten des zweiten Sende-/Empfangselements (zum Beispiel von von einem Sensorelement bereitgestellten Sensorsignalen, welche ebenfalls mittels des zweiten Sende-/Empfangselements gesendet werden) unterschieden werden. Ist die Lese-Einrichtung an einem mobilen Gegenstand, z.B. einem Fahrzeug (beispielsweise einem autonomen Roboterfahrzeug), angebracht, kann die genaue Position des Gegenstands berechnet werden. Dabei kann mittels der Triangulation sogar eine Ortsauflösung erreicht werden, die höher ist als die Ortsauflösung der Anordnung der Sende-/Empfangseinheiten. Gemäß der vorgenannten Ausgestaltung der Erfindung ist es beispielsweise möglich, die Navigation und/oder Lokalisation eines Roboterfahrzeugs mit den Funkmodulen eines Sensorbodens auch ohne RFID-Tags zu realisieren. Mit anderen Worten ist gemäß der eben beschriebenen Ausgestaltung der Erfindung das mindestens eine erste Sende-/Empfangselement in der mindestens einen Sende-/Empfangseinheit nicht erforderlich. Das heißt, gemäß dieser Ausgestaltung ist nur das zweite Sende-/Empfangselement in der Sende-/Empfangseinheit vorhanden. Das zweite Sende-/Empfangselement kann daher in diesem Fall auch einfach als Sende-/Empfangselement bezeichnet werden.

Ausführungsbeispiele der Erfindung sind in den Figuren dargestellt und werden im Folgenden näher erläutert. In den Figuren sind gleiche oder ähnliche Elemente, soweit sinnvoll, mit gleichen oder identischen Bezugszeichen versehen. Die in den Figuren gezeigten Darstellungen sind schematisch und daher nicht maßstabsgetreu gezeichnet.

Es zeigen
- Figur 1A: eine Sensor-/Aktor-Anordnung gemäß einem ersten Ausführungsbeispiel der Erfindung;
- Figur 1B: eine Sensor-/Aktor-Anordnung gemäß einem zweiten Ausführungsbeispiel der Erfindung;
- Figur 2: eine Sende-/Empfangseinheit einer Sensor-/Aktor-Anordnung gemäß einem Ausführungsbeispiel der Erfindung;
- Figur 3: eine Sensor-/Aktor-Anordnung gemäß einem dritten Ausführungsbeispiel der Erfindung;
- Figur 4: eine Sensor-/Aktor-Anordnung gemäß einem vierten Ausführungsbeispiel der Erfindung;
- Figur 5: ein Flussdiagramm zur Veranschaulichung einzelner Schritte bei der Installation einer Sensor-/Aktor-Anordnung gemäß einem Ausführungsbeispiel der Erfindung;
- Figur 6: ein Flussdiagramm zur Veranschaulichung einzelner Schritte bei der Inbetriebnahme einer Sensor-/Aktor-Anordnung gemäß einem Ausführungsbeispiel der Erfindung.

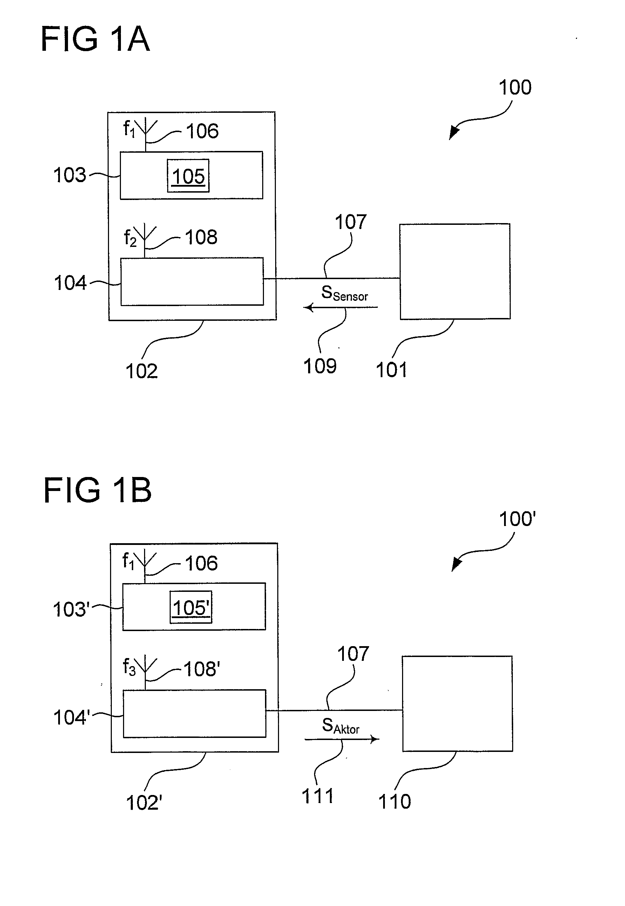

**Fig.1A** zeigt eine Sensor-/Aktor-Anordnung 100 gemäß einem ersten Ausführungsbeispiel der Erfindung. Die Sensor-/Aktor-Anordnung 100 weist ein Sensorelement 101 sowie eine Sende-/Empfangseinheit 102 auf. Die Sende-/Empfangseinheit 102 weist ein erstes Sende-/Empfangselement 103 und ein zweites Sende-/Empfangselement 104 zum Senden und/oder Empfangen von Signalen auf.

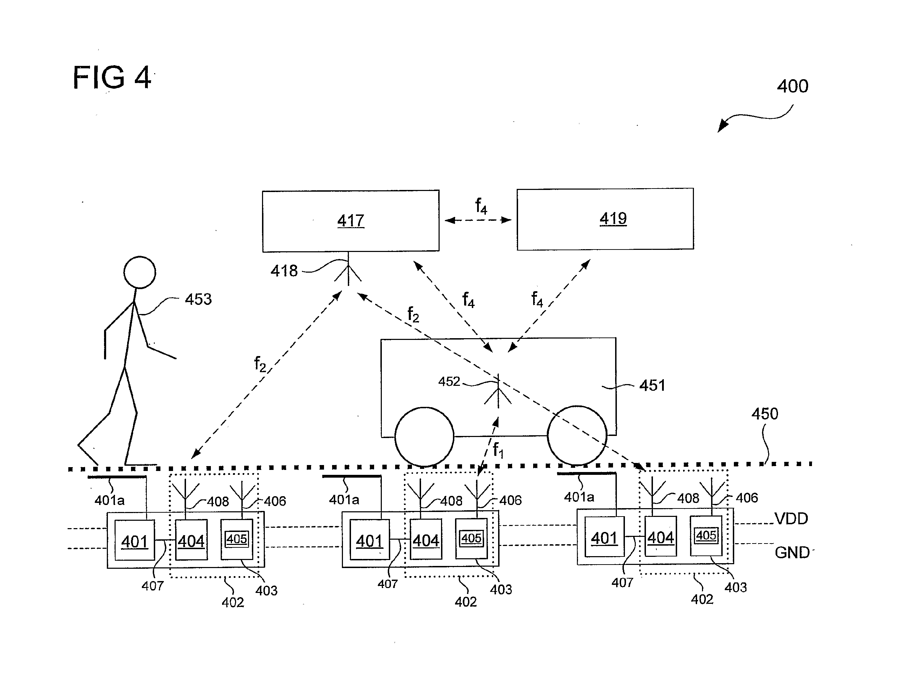

Das erste Sende-/Empfangselement 103 enthält eine für die Sende-/Empfangseinheit 102 eindeutige Kennungs-Information 105, welche mittels eines ersten Kommunikationskanals mit Hilfe eines Drahtlos-Signals mit einer ersten Sende-/Empfangsfrequenz f₁ ausgelesen werden kann (durch das Antennensymbol 106 in Fig.1A gekennzeichnet), z.B. von einer in einem Roboterfahrzeug ausgebildeten Lese-Einrichtung (nicht gezeigt, vgl. Fig.4).

Das zweite Sende-/Empfangselement 104 ist mit dem Sensorelement 101 elektrisch gekoppelt (durch die Kopplungslinie 107 in Fig.1A gekennzeichnet), so dass das zweite Sende-/Empfangselement 104 ein von dem Sensorelement 101 bereitgestelltes Sensorsignal Sₛₑₙₛₒᵣ mittels eines zweiten Kommunikationskanals senden kann (durch den Pfeil 109 in Fig.1A gekennzeichnet).

In dem in Fig.1A gezeigten Ausführungsbeispiel ist das zweite Sende-/Empfangselement 104 so eingerichtet, dass das Sensorsignal S_{Sensor} als Drahtlos-Signal mit einer zweiten Sende-/Empfangsfrequenz f₂ gesendet werden kann (durch das Antennensymbol 108 in Fig.1A veranschaulicht), z.B. an eine lokale Sende-/Empfangs-Einrichtung (nicht gezeigt, vgl. Fig.4), wobei die zweite Sende-/Empfangsfrequenz f₂ von der ersten Sende-/Empfangsfrequenz f₁ verschieden ist.

Der erste Kommunikationskanal und der zweite Kommunikationskanal sind somit in dem in Fig.1A gezeigten Ausführungsbeispiel jeweils als Drahtlos-Kommunikationskanal eingerichtet.

In alternativen Ausgestaltungen der Erfindung kann das zweite Sende-/Empfangselement 104 so eingerichtet sein, dass das Sensorsignal Sₛₑₙₛₒᵣ als drahtgebundenes Signal gesendet werden kann.

**Fig.1B** zeigt eine Sensor-/Aktor-Anordnung 100' gemäß einem zweiten Ausführungsbeispiel der Erfindung. Die Sensor-/Aktor-Anordnung 100' weist ein Aktorelement 110 sowie eine Sende-/Empfangseinheit 102' auf. Die Sende-/Empfangseinheit 102' weist ein erstes Sende-/Empfangselement 103' und ein zweites Sende-/Empfangselement 104' zum Senden und/oder Empfangen von Signalen auf.

Das erste Sende-/Empfangselement 103' enthält eine für die Sende-/Empfangseinheit 102' eindeutige Kennungs-Information 105', welche mittels eines ersten Kommunikationskanals mit Hilfe eines Drahtlos-Signals mit der ersten Sende-/Empfangsfrequenz f₁ ausgelesen werden kann (analog zu Fig.1A durch das Antennensymbol 106 in Fig.1B gekennzeichnet).

Das zweite Sende-/Empfangselement 104' ist mit dem Aktorelement 110 elektrisch gekoppelt (analog zu Fig.1A durch die Kopplungslinie 107 in Fig.1B gekennzeichnet), so dass ein mittels eines zweiten Kommunikationskanals empfangenes Aktor-Steuersignal S_{Aktor} an dem Aktorelement 110 bereitgestellt werden kann (durch den Pfeil 111 in Fig.1B gekennzeichnet).

In dem in Fig.1B gezeigten Ausführungsbeispiel ist das zweite Sende-/Empfangselement 104' so eingerichtet, dass das Aktor-Steuersignal S_{Aktor} als Drahtlos-Signal mit einer dritten Sende-/Empfangsfrequenz f₃ empfangen werden kann (durch das Antennensymbol 108' in Fig.1B veranschaulicht), wobei die dritte Sende-/Empfangsfrequenz f₃ von der ersten Sende-/Empfangsfrequenz f₁ verschieden ist. Die dritte Sende-/Empfangsfrequenz f₃ kann mit der im Zusammenhang mit Fig.1A erwähnten zweiten Sende-/Empfangsfrequenz f₂ identisch sein.

Das Aktor-Steuersignal S_{Aktor} kann z.B. von einer lokalen Sende-/Empfangs-Einrichtung (nicht gezeigt) bereitgestellt werden.

In alternativen Ausgestaltungen kann das zweite Sende-/Empfangselement 104' so eingerichtet sein, dass das Aktorsignal S_{Aktor} als drahtgebundenes Signal empfangen werden kann.

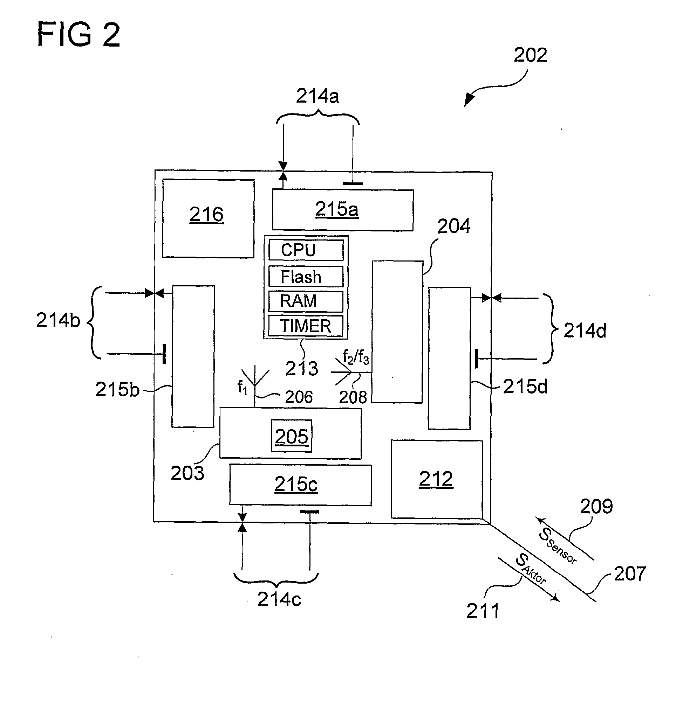

**Fig.2** zeigt eine Sende-/Empfangseinheit 202 einer Sensor-/Aktor-Anordnung gemäß einem Ausführungsbeispiel der Erfindung. Die Sende-/Empfangseinheit 202 weist ein als RF-Element ausgebildetes erstes Sende-/Empfangselement 203 auf, sowie ein ebenfalls als RF-Element ausgebildetes zweites Sende-/Empfangselement 204. Das erste Sende-/Empfangselement 203 ist als passives RF-Element ausgebildet (z.B. als passiver RFID-Tag) und enthält eine für die Sende-/Empfangseinheit 202 eindeutige Kennungs-Information 205 (bzw. Identifier), z.B. in Form einer eindeutigen Kennungs-Nummer, welche mit einem Drahtlos-Signal mit einer ersten Sende-/Empfangsfrequenz f₁ drahtlos ausgelesen werden kann (durch das Antennensymbol 206 in Fig.2 veranschaulicht).

Die Sende-/Empfangseinheit 202 weist weiterhin einen elektrischen Anschluss 212 auf, welcher mit einem Sensorelement bzw. einem Aktorelement gekoppelt werden kann (durch die Kopplungslinie 207 in Fig.2 gekennzeichnet), so dass Sensorsignale Sₛₑₙₛₒᵣ an dem elektrischen Anschluss 212 empfangen werden können (durch den Pfeil 209 veranschaulicht) oder Aktor-Steuersignale S_{Aktor} an einem mit dem elektrischen Anschluss 212 gekoppelten Aktorelement bereitgestellt werden können (durch den Pfeil 211 veranschaulicht). Anders ausgedrückt dient der elektrische Anschluss 212 zum Empfangen von Eingangssignalen (Input-Signalen) eines mit dem elektrischen Anschluss 212 gekoppelten Sensorelementes bzw. zum Bereitstellen von Ausgangssignalen (Output-Signalen) an einem mit dem elektrischen Anschluss 212 gekoppelten Aktorelement.

Der elektrische Anschluss 212 ist außerdem mit dem zweiten Sende-/Empfangselement 204 gekoppelt, so dass beispielsweise ein an dem elektrischen Anschluss 212 empfangenes Sensorsignal S_{Sensor} (Eingangssignal) an das zweite Sende-/Empfangselement 204 weitergeleitet werden kann, welches zweite Sende-/Empfangselement 204 das Sensorsignal Sₛₑₙₛₒᵣ dann als Drahtlos-Signal mit einer zweiten Sende-/Empfangsfrequenz f₂, welche von der ersten Sende-/Empfangsfrequenz f₁ verschieden ist, sendet, z.B. an eine lokale Sende-/EmpfangsEinrichtung (nicht gezeigt, vgl. Fig.4) in der näheren Umgebung der Sende-/Empfangseinheit 202, was durch das Antennensymbol 208 in Fig.2 gekennzeichnet ist.

Ebenso kann, falls der elektrische Anschluss 212 mit einem Aktorelement gekoppelt ist, ein von dem zweiten Sende-/Empfangselement 204 drahtlos empfangenes Aktor-Steuersignal S_{Aktor} mit einer dritten Sende-/Empfangsfrequenz f₃ (wobei f₃ gleich oder ungleich f₂ sein kann) an dem mit dem zweiten Sende-/Empfangselement 204 gekoppelten elektrischen Anschluss 212 bereitgestellt werden, und kann somit einem mit dem elektrischen Anschluss 212 gekoppelten Aktorelement bereitgestellt werden.

Zusätzlich zu dem in Fig.2 gezeigten elektrischen Anschluss 212 können weitere elektrische Anschlüsse zum elektrischen Kontaktieren von Sensorelementen und/oder Aktorelementen in der Sende-/Empfangseinheit 202 ausgebildet sein (nicht gezeigt), welche Anschlüsse ebenfalls mit dem zweiten Sende-/Empfangselement 204 elektrisch gekoppelt sein können. Mit anderen Worten kann das zweite Sende-/Empfangselement 204 von einer Mehrzahl von Sensorelementen Sensorsignale S_{Sensor} empfangen und/oder Aktor-Steuersignale S_{Aktor} an eine Mehrzahl von Aktor-Elementen weiterleiten.

Die Sende-/Empfangseinheit 202 enthält weiterhin einen Prozessorkern 213 mit einer CPU (Central Processing Unit), einem Flash-Speicherelement, einem RAM-Speicherelement sowie einem Timer-Element.

Die Sende-/Empfangseinheit 202 ist ferner mittels eines ersten Versorgungsspannungs-Anschlusses 214a, eines zweiten Versorgungsspannungs-Anschlusses 214b, eines dritten Versorgungsspannungs-Anschlusses 214c und eines vierten Versorgungsspannungs-Anschlusses 214d an eine Versorgungsspannungsquelle angeschlossen. Die von der Versorgungsspannungsquelle bereitgestellte Versorgungsspannung liefert die für den Betrieb der Sende-/Empfangseinheit 202 und eventuell an die Sende-/Empfangseinheit angeschlossener Sensorelemente und/oder Aktorelemente erforderliche Energie.

Das als passives RF-Element ausgebildete erste Sende-/Empfangselement 203 kann die für seinen Betrieb notwendige Energie aus dem elektromagnetischen Feld des Auslesesignals beziehen und kann daher auch ohne eine Kopplung mit der Versorgungsspannungsquelle funktionsfähig sein.

Die Sende-/Empfangseinheit 202 ist mittels mehrerer (i.e. der vier in Fig.2 gezeigten) Versorgungsspannungs-Anschlüsse 214a, 214b, 214c, 214d an die Versorgungsspannung angeschlossen, um durch Redundanz einen Ausfall der Sende-/Empfangseinheit 202 zu vermeiden.

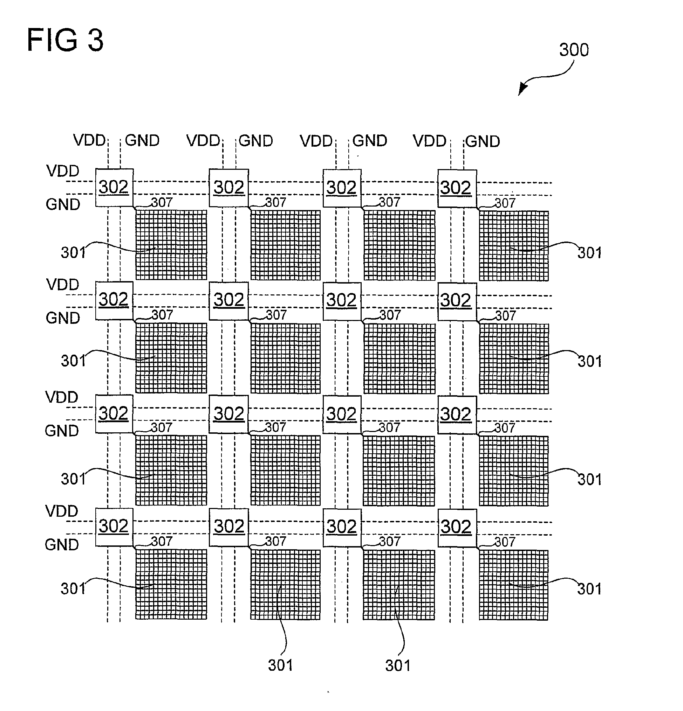

Die Sende-/Empfangseinheit 202 kann in einem Netzwerk aus einer Mehrzahl von zumindest teilweise miteinander und mit einer Mehrzahl von Sensorelementen und/oder Aktorelementen gekoppelten Sende-/Empfangseinheiten ausgebildet sein (vgl. Fig.3), welche Sende-/Empfangseinheiten in einem regelmäßigen Raster (z.B. Rechteckraster bzw. quadratisches Raster) angeordnet sein können. Eine in einem solchen Netzwerk aus Sende-/Empfangseinheiten bzw. Sensorelementen/Aktorelementen (Sensor-/Aktor-Netzwerk) ausgebildete Sende-/Empfangseinheit 202 wird im Folgenden auch als Netzwerkelement des Sensor-/Aktor-Netzwerkes bezeichnet. Im Falle eines Sensor-/Aktor-Netzwerkes mit einem Rechteckraster kann die Sende-/Empfangseinheit 202 (bzw. das Netzwerkelement 202) mit mindestens einem anderen Netzwerkelement und mit bis zu vier anderen Netzwerkelementen (Sende-/Empfangseinheiten), welche sich auf den Nächste-Nachbar-Plätzen des Rasters befinden, gekoppelt sein (vgl. Fig.3).

An jedem der vier Versorgungsspannungs-Anschlüsse 214a, 214b, 214c, 214d der Sende-/Empfangseinheit 202 ist ein Schaltelement (elektronischer Schalter bzw. Power Switch) eingefügt, welches im Falle eines Kurzschlusses im Netzwerk den betreffenden Versorgungszweig automatisch abschaltet. Das heißt, ein erstes Schaltelement 215a ist mit dem ersten Versorgungsspannungs-Anschluss 214a elektrisch gekoppelt, ein zweites Schaltelement 215b ist mit dem zweiten Versorgungsspannungs-Anschluss 214b elektrisch gekoppelt, ein drittes Schaltelement 215c ist mit dem dritten Versorgungsspannungs-Anschluss 214c elektrisch gekoppelt, und ein viertes Schaltelement 215d ist mit dem vierten Versorgungsspannungs-Anschluss 214d elektrisch gekoppelt.

Der Wert der Versorgungsspannung im Netzwerk kann über der notwendigen Versorgungsspannung des Netzwerkelementes 202 liegen, um Übertragungsverluste klein zu halten und eine sichere Funktion zu gewährleisten. Mit anderen Worten kann die Netzspannung höher gewählt werden als die Versorgungsspannung des Netzwerkelementes 202, wodurch eine verlustärmere Energieübertragung im Netzwerk erreicht werden kann, und wodurch außerdem erreicht werden kann, dass Spannungsabfälle im Netzwerk nicht dazu führen, dass die Spannung an dem Netzwerkelement 202 (und evtl. weiteren Netzwerkelementen) unter die Betriebsspannung abfällt.

Die in Fig.2 gezeigte Sende-/Empfangseinheit 202 bzw. das Netzwerkelement 202 weist ein Spannungs-Regel-Element (Switching Supply) 216 bzw. Spannungsregler 216 auf, welches Spannungs-Regel-Element 216 so eingerichtet ist, dass mit Hilfe des Spannungs-Regel-Elementes 216 die Spannung auf den für das Netzwerkelement 202 benötigten Wert herunterregelt werden kann.

**Fig.3** zeigt eine Sensor-/Aktor-Anordnung 300 gemäß einem dritten Ausführungsbeispiel der Erfindung. Die Sensor-/Aktor-Anordnung 300 weist eine Mehrzahl von Sensorelementen 301 auf, sowie eine Mehrzahl von Sende-/Empfangseinheiten 302, wobei jede Sende-/Empfangseinheit 302 (genauer ein in der Sende-/Empfangseinheit ausgebildetes zweites Sende-/Empfangselement, vgl. Fig.1A) mit jeweils einem Sensorelement 301 elektrisch gekoppelt ist (durch die Kopplungslinien 307 in Fig.3 gekennzeichnet). Die Sensor-/Aktor-Anordnung 300 ist als ein Netzwerk von in einem regelmäßigen Rechteckraster angeordneten Sende-/Empfangseinheiten 302 (im Folgenden auch als Netzwerkelemente 302 bezeichnet) ausgebildet, wobei die Sende-/Empfangseinheiten (Netzwerkelemente) 302 mittels Versorgungsspannungsleitungen VDD (hohes elektrisches Potential) und GND (Masse-Potential) miteinander und mit einer elektrischen Versorgungsspannungsquelle (nicht gezeigt) gekoppelt sind. Jedes Netzwerkelement 302 ist mit seinen vier nächsten Nachbarn im Raster, d.h. den Netzwerkelementen 302 auf den vier Nächste-Nachbar-Plätzen, gekoppelt. Ein Netzwerkelement 302 kann dazu vier elektrische Versorgungsspannungs-Anschlüsse aufweisen, sowie vier Schaltelemente zur Vermeidung von Kurzschlüssen im Netzwerk 300, wobei je ein Schaltelement mit je einem der vier elektrischen Versorgungsspannungs-Anschlüsse gekoppelt sein kann (vgl. Fig.2).

Die Sensorelemente 301 und die Netzwerkelemente 302 der als Sensor-/Aktor-Netzwerk ausgebildeten Sensor-Aktor-Anordnung 300 sind in einer Flächenverkleidungsstruktur einer Fläche (z.B. einer Bodenverkleidung eines Fußbodens) ausgebildet, und die Netzwerkelemente 302 sind über die Versorgungsspannungsleitungen VDD bzw. GND miteinander verbunden. An jedem Netzwerkelement 302 des Sensor-/Aktor-Netzwerkes 300 ist in diesem Ausführungsbeispiel jeweils ein Sensorelement 301 angeschlossen, wobei die Sensorelemente 301 Sensorflächen aufweisen, welche Sensorflächen zwischen den Versorgungsspannungsleitungen VDD und GND ausgebildet sind.

Alternativ kann ein Netzwerkelement auch mit einer Mehrzahl von Sensorelementen gekoppelt sein. Ein Netzwerkelement 302 der Sensor-/Aktor-Anordnung 300 kann zum Beispiel mit zweien oder mehreren der dem Netzwerkelement 302 unmittelbar benachbarten Sensorelemente 301 gekoppelt sein. In einer anderen (nicht gezeigten) Ausgestaltung der Erfindung kann ein Netzwerkelement einer Sensor-/Aktor-Anordnung mit acht Sensorelementen gekoppelt sein, welche Sensorelemente eine Dreiecksform aufweisen können.

Umgekehrt kann ein Sensorelement alternativ mit einer Mehrzahl von Netzwerkelementen gekoppelt sein. Ein Sensorelement 301 der Sensor-/Aktor-Anordnung 300 kann zum Beispiel mit zweien oder mehreren der unmittelbar benachbarten Netzwerkelemente 302 gekoppelt sein.

Mit Hilfe der Sensorelemente 301 kann beispielsweise eine auf der Fläche (z.B. dem Fußboden) befindliche Person lokalisiert und/oder verfolgt werden. Zum Beispiel kann eine Sensorfläche, falls sich eine auf der Fläche bzw. der Flächenverkleidung befindliche Person über der Sensorfläche befindet, in einem Drucksensor ein Sensorsignal erzeugen. Mit anderen Worten wird von dem Drucksensor bei Eintreten eines Sensorereignisses (ausgelöst durch eine sich auf der Fläche über der mit dem Drucksensor gekoppelten Sensorfläche befindliche Person) ein Sensorsignal an die mit dem Drucksensor gekoppelte Sende-/Empfangseinheit 302 (bzw. das zweite Sende-/Empfangselement der entsprechenden Sende-/Empfangseinheit 302) geleitet und von dort als Drahtlos-Signal (alternativ als drahtgebundenes Signal z.B. mittels Powerline Communication, PLC) z.B. an eine lokale Sende-/Empfangs-Einrichtung gesendet, vgl. Fig.4. Mit Hilfe der lokalen Sende-/Empfangs-Einrichtung kann das Sensorsignal an eine zentrale Steuer-Einrichtung (z.B. PC) weitergeleitet werden, welche das Signal auswertet und daraus die Position der Person bestimmt. Wenn sich die Person über die Fläche bewegt, so werden sukzessive von verschiedenen Sensorelementen (z.B. Drucksensoren) Sensorereignisse ausgelöst und entsprechend als Sensorsignale an die gekoppelten Sende-/Empfangseinheiten (Netzwerkelemente) weitergeleitet, welche Sende-/Empfangseinheiten die Sensorsignale drahtlos (oder alternativ drahtgebunden z.B. mittels PLC) an eine lokale Sende-/Empfangs-Einrichtung senden können, von wo aus die Signale drahtlos (z.B. mittels Bluetooth oder WLAN) oder drahtgebunden (z.B. mittels PLC, LAN oder EIB) an die zentrale Steuer-Einrichtung weitergeleitet werden können. Die zentrale Steuer-Einrichtung kann die zeitliche und räumliche Abfolge der ausgelösten Sensorereignisse auswerten und damit die Bewegung der Person verfolgen.

**Fig.4** zeigt eine Sensor-/Aktor-Anordnung (Sensor-/Aktor-Netzwerk) 400 gemäß einem vierten Ausführungsbeispiel der Erfindung. Die Sensor-/Aktor-Anordnung 400 weist eine Mehrzahl von mittels Versorgungsspannungsleitungen VDD (hohes elektrisches Potential) bzw. GND (elektrisches Masse-Potential) miteinander sowie mit einer Versorgungsspannungsquelle (nicht gezeigt) gekoppelten Sende-/Empfangseinheiten (Netzwerkelementen) 402 auf, welche Sende-/Empfangseinheiten 402 jeweils ein als passiver RFID-Tag ausgebildetes erstes Sende-/Empfangselement 403 mit einer für die Sende-/Empfangseinheit 402 eindeutigen Kennungs-Information 405 (eindeutige Identifikations-Nummer des RFID-Tags 403) sowie ein als RF-Element ausgebildetes zweites Sende-/Empfangselement 404 aufweisen, wobei das zweite Sende-/Empfangselement 404 jeder Sende-/Empfangseinheit 402 jeweils mit einem Sensorelement 401 elektrisch gekoppelt ist (durch die Kopplungslinie 407 in Fig.4 gekennzeichnet). Das Sensorelement 401 ist dabei als Näherungssensor ausgebildet, welcher Näherungssensor eine Sensorfläche 401a aufweist.

Die Sende-/Empfangseinheiten 402 und die Sensorelemente 401 (einschließlich der Sensorflächen 401a) der Sensor-/Aktor-Anordnung 400 sind in einer Flächenverkleidung einer Fußbodenfläche 450 ausgebildet bzw. integriert. Ein sich auf der Fläche 450 befindliches bewegliches Objekt, z.B. ein Roboterfahrzeug 451, welches eine zum Drahtlos-Kommunizieren eingerichtete Lese-Einrichtung aufweist (durch das Antennensymbol 452 in Fig.4 veranschaulicht), kann beim Überfahren einer Sende-/Empfangseinheit 402 diese erkennen und kann die in dem ersten Sende-/Empfangselement 403 (i.e. dem passiven RFID-Tag 403) der Sende-/Empfangseinheit 402 enthaltene Kennungs-Information 405 unter Verwendung eines ersten Kommunikationskanals mittels eines Drahtlos-Signals mit einer ersten Sende-/Empfangsfrequenz f₁ (z.B. 13,56 MHz) drahtlos auslesen.

Anhand der Kennungs-Information 405 (i.e. der Identifikations-Nummer des RFID-Tags 403) und einer in einer zentralen Steuer-Einrichtung 419 gespeicherten Kartisierung kann das Roboterfahrzeug 452 seine aktuelle Position ermitteln, zum Beispiel indem das Roboterfahrzeug 452 die in dem ersten Sende-/Empfangselement 403 enthaltene Kennungs-Information 405 (i.e. die Identifikations-Nummer des RFID-Tags 403) mittels eines Drahtlos-Kommunikationskanals an die zentrale Steuer-Einrichtung 419 übermittelt (z.B. unter Verwendung eines Bluetooth-Standards oder eines WLAN-Standards) und einen Abgleich mit der in der Steuer-Einrichtung 419 gespeicherten Kartisierung vornimmt. Die Funktion des RFID-Tags 403 kann direkt in die Prozessorknoten eines Prozessors (vgl. Fig.2) eines Netzwerkelementes 402 integriert sein.

Ein Sensorelement bzw. Näherungssensor 401 löst ein Sensorsignal aus, wenn sich eine auf der Fläche 450 befindliche Person 451 in der Nähe des Näherungssensors 401 befindet. Das Sensorsignal wird von dem Sensorelement 401 an das mit dem Sensorelement 401 elektrisch gekoppelte zweite Sende-/Empfangselement 404 der Sende-/Empfangseinheit 402 übertragen. Anschaulich wird im Ereignisfall von der Sensorfläche 401a im Sensor 401 ein Sensorsignal erzeugt, und der Sensor 401 "meldet" dieses Sensorsignal an das zweite Sende-/Empfangselement 404.

Mit Hilfe des als RF-Element ausgebildeten zweiten Sende-/Empfangselementes 404 wird die Identifikations-Nummer der Sende-/Empfangseinheit 402 unter Verwendung eines zweiten Kommunikationskanals mittels eines Drahtlos-Signals mit einer zweiten Sende-/Empfangsfrequenz f₂ (z.B. 868 MHz) an eine lokale Sende-/Empfangs-Einrichtung 417 gesendet, welche lokale Sende-/Empfangs-Einrichtung 417 mit den zweiten Sende-/Empfangselementen 404 der in der Umgebung (d.h. in dem Sende-/Empfangsbereich) der lokalen Sende-/EmpfangsEinrichtung 417 befindlichen Sende-/Empfangseinheiten 402 drahtlos (mit der Frequenz f₂) kommuniziert (durch das Antennensymbol 418 gekennzeichnet). Mit Hilfe der Orts-/Zeitinformation der mittels des zweiten Sende-/Empfangselementes 404 gesendeten Sensorereignisse kann in der lokalen Sende-/Empfangs-Einrichtung 417 oder in der zentralen Steuer-Einrichtung 419 eine Auswertung zum Beispiel durch Berechnung von Trajektorien erfolgen.

In einer alternativen Ausgestaltung der Erfindung kann das zweite Sende-/Empfangselement 404 eines oder mehrerer der in der Flächenverkleidung der Fußbodenfläche 450 ausgebildeten Netzwerkelemente 402 mit einem oder mehreren Aktorelementen elektrisch gekoppelt sein, und ein mit einem Aktorelement gekoppeltes zweites Sende-/Empfangselement 404 kann in diesem Fall Aktor-Steuersignale als Drahtlos-Signale mit einer dritten Sende-/Empfangsfrequenz f₃ (wobei f₃ = f₂ sein kann) empfangen und diese Aktor-Steuersignale an dem Aktorelement bereitstellen. Eines oder mehrere der Aktorelement können beispielsweise als in die Fußbodenverkleidung integrierte Leuchtdioden (LEDs) ausgebildet sein, und beispielsweise zum Anzeigen eines Fluchtweges verwendet werden.

Die lokale Sende-/Empfangs-Einrichtung 417 und die zentrale Steuer-Einrichtung 419 kommunizieren drahtlos mit einer vierten Sende-/Empfangsfrequenz f₄ (zum Beispiel unter Verwendung eines Bluetooth-Standards, eines WLAN-Standards, oder eines anderen geeigneten Standards für eine Drahtlos-Kommunikation). Alternativ können die lokale Sende-/EmpfangsEinrichtung 417 und die zentrale Steuer-Einrichtung 419 drahtgebunden miteinander kommunizieren, zum Beispiel unter Verwendung eines Haus-Bus-Systems (z.B. EIB-Bus), einer Powerline-Communication-Einrichtung oder anderer geeigneter drahtgebundener Kommunikations-Wege. Die zentrale Steuer-Einrichtung 419 kann entsprechend den Vorgaben verschiedene Funktionen wie zum Beispiel Notruf, Einbruchsalarm, Anzeigefunktionen u.a. auslösen.

Das in Fig.4 gezeigte Roboterfahrzeug 452 kann außerdem nach Bedarf drahtlos (z.B. mit der vierten Sende-/Empfangsfrequenz f₄) mit der lokalen Sende-/Empfangs-Einrichtung 417 oder direkt mit der zentralen Steuer-Einrichtung 419 (z.B. dem zentralen PC) kommunizieren.

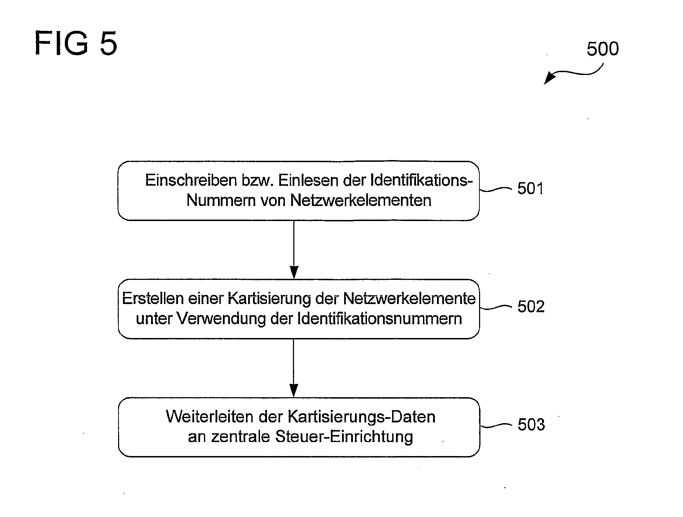

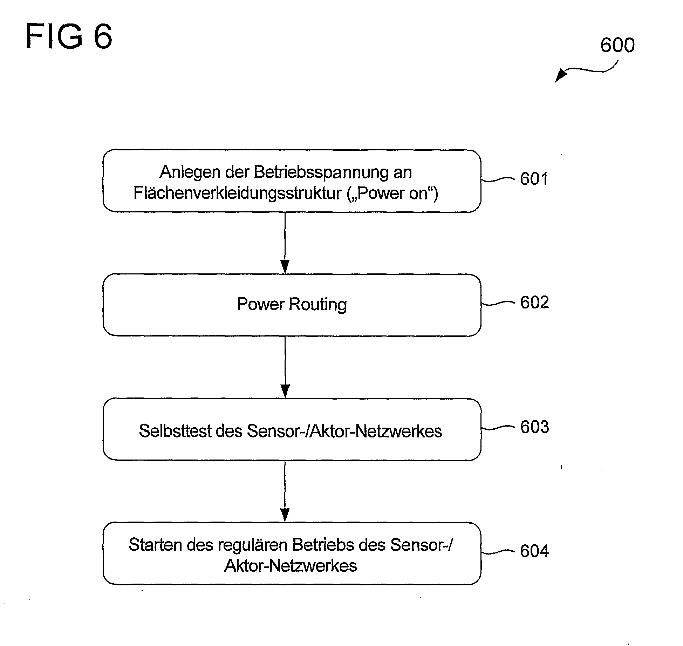

Im Folgenden werden anhand der in **Fig.5** bzw. **Fig.6** dargestellten Flussdiagramme 500 bzw. 600 einzelne Schritte bei der Installation bzw. bei der Inbetriebnahme einer als Sensor-/Aktor-Netzwerk in einer Flächenverkleidungsstruktur einer Fläche ausgebildeten Sensor-/Aktor-Anordnung beschrieben.

Nach der Installation der Flächenverkleidungsstruktur (vgl. Fig.3) werden mit Hilfe einer geeigneten Lese-/SchreibEinrichtung, welche Lese-/Schreib-Einrichtung mit dem als RF-Element ausgebildeten ersten Sende-/Empfangselement der Sende-/Empfangseinheit (bzw. des Netzwerkelementes) kommunizieren kann, die während der Produktion der Netzwerkelemente in die einzelnen Netzwerkelemente eingeschriebenen (eindeutigen) Identifikationsnummern gelesen (Schritt 501 in Fig.5), und unter Verwendung der Identifikationsnummern wird eine Kartisierung der Netzwerkelemente vorgenommen (Schritt 502). Zusätzlich kann während dieses Vorgangs ein Koordinatensystem in die Flächenverkleidungsstruktur eingeschrieben werden. Die Daten der Kartisierung werden an die zentrale Steuer-Einrichtung weitergeleitet (Schritt 503). Die zentrale Steuer-Einrichtung kann zum Beispiel ein zentraler PC sein oder auch in einem Roboterfahrzeug selbst angebracht sein. Der Vorgang der Kartisierung kann manuell oder über ein geeignetes Roboterfahrzeug automatisch erfolgen. Auf jeden Fall wird die Kartisierung ein einmaliger oder zumindest selten durchzuführender Vorgang bei der Installation des Systems sein.

Die nächste Phase der Inbetriebnahme erfolgt beim Anlegen der Betriebsspannung ("Power on") an die Flächenverkleidungsstruktur (Schritt 601 in Fig.6). Nach dem Anlegen der Betriebsspannung kann, ähnlich wie in [2] beschrieben, ein Power-Routing-Verfahren durchgeführt werden (Schritt 602). Liegt an einem Netzwerkelement oder an mehreren Netzwerkelementen eine Versorgungsspannung an, so kann ein interner Prozessor des Netzwerkelementes die weiteren Versorgungsspannungsanschlüsse des Netzwerkelementes auf Kurzschlüsse testen. Alle Anschlüsse, die keinen Kurzschluss zeigen, können niederohmig an das Netzwerkelement angeschlossen werden. Anschlüsse mit Kurzschlüssen können elektronisch, zum Beispiel unter Verwendung von Schaltelementen ("Power Switches"), abgeschaltet werden.

Mit anderen Worten können beim Anlegen einer Versorgungsspannung an die Flächenverkleidungsstruktur mit Hilfe eines Power-Routing-Verfahrens automatisch Kurzschlüsse im Netzwerk lokalisiert werden (d.h. es können die Positionen der Netzwerkelemente bzw. der Anschlüsse, welche Netzwerkelemente bzw. Anschlüsse Kurzschlüsse aufweisen, ermittelt werden), und die Kurzschlüsse können automatisch unter Verwendung elektronischer Schalter eliminiert werden.

Der Zustand der Schaltelemente bzw. Schalter kann im Prozessor des Netzwerkelementes gespeichert werden und in der nachfolgenden Phase, dem Selbsttest des Netzwerkes (Schritt 603), an die lokale Sende-/Empfangs-Einrichtung (und von dort an die zentrale Steuer-Einrichtung) oder direkt an die zentrale Steuer-Einrichtung weitergeleitet werden. Während des Selbsttests des Systems kann die lokale Sende-/EmpfangsEinrichtung mittels der zweiten Sende-/Empfangsfrequenz f₂ jedes einzelne Netzwerkelement entsprechend der vorherigen Kartisierung sukzessive ansprechen und kann eine Rückmeldung vom jeweiligen Netzwerkelement erhalten, welche Rückmeldung die Funktion des Netzwerkelementes bestätigen und ferner den Zustand der Schaltelemente (Schalter) und anderer Funktionselemente wie z.B. Sensorelemente (Sensoren) und/oder Aktorelemente (Aktuatoren) beschreiben kann. Der Funktionszustand kann automatisch in die Kartisierung übernommen werden. Bleibt die Rückmeldung eines Netzwerkelementes aus, so kann eine Fehlermeldung für diese Stelle der Flächenverkleidungsstruktur erzeugt werden.

Mit anderen Worten können bei einem Selbsttest des Systems mit Hilfe der lokalen Sende-/Empfangs-Einrichtung alle Netzwerkelemente, die auf der Kartisierung vorhanden sind, einzeln angesprochen werden, nacheinander auf ihre Funktion getestet werden und etwaige Fehlermeldungen in der Kartisierung aufgenommen werden.

Falls eine relativ große Dichte an Netzwerkelementen und/oder eine hohe Redundanz bei den Versorgungsspannungsanschlüssen in der Flächenverkleidungsstruktur realisiert werden, werden einzelne Ausfälle von Netzwerkteilen die Funktionsfähigkeit der Gesamtstruktur nur unwesentlich beeinflussen. Nach dem Selbsttest des Sensor-/Aktor-Netzwerkes und der Übertragung der Daten an die zentrale Steuer-Einrichtung ist das System funktionsfähig und kann den regulären Betrieb aufnehmen (Schritt 604).

Autonom fahrende Fahrzeuge oder bewegliche Gegenstände, die mit einer Lese-Einrichtung bzw. einem Sende-/Empfangselement für die Frequenz f1 ausgerüstet sind, erkennen beim Überfahren eines Netzwerkelementes dieses und erhalten über dessen Identifikationsnummer und die Kartisierung, die in der zentralen Steuer-Einrichtung abgelegt ist, ihre aktuelle Position. Eine Person, die über eine Sensorfläche der Flächenverkleidungsstruktur läuft, löst, wenn das Netzwerkelement zum Beispiel einen kapazitiven Näherungssensor aufweist, ein Signal aus. Dieses Signal kann von einem als RF-Element ausgebildeten zweiten Sende-/Empfangselement des Netzwerkelementes zur lokalen Sende-/Empfangs-Einrichtung drahtlos mittels der Frequenz f₂ übertragen werden. Mit der Orts- und Zeitinformation der übertragenen Signale kann das lokale Sende-/Empfangselement z.B. Trajektorien berechnen und Ereignisse definieren wie z.B. Einbruch, Sturz einer Person oder z.B. letzte Person verlässt den Raum. Damit können wiederum entsprechende Aktionen wie z.B. Einbruchalarm, Notruf oder Energiesparmodus ausgelöst werden.

In diesem Dokument sind folgende Veröffentlichungen zitiert:
[1] WO 2005/006015 A1
[2] DE 103 44 285 A1
[3] DE 101 03 302 A1
[4] DE 197 30 794 A1
[5] EP 1 022 923 A2
[6] WO 2005/071597 A1
[7] WO 00/75417 A
[8] US 2005/088299 A1

### Bezugszeichenliste

- 100, 100': Sensor-/Aktor-Anordnung
- 101: Sensorelement
- 102, 102': Sende-/Empfangseinheit
- 103, 103': erstes Sende-/Empfangselement
- 104, 104': zweites Sende-/Empfangselement
- 105, 105': Kennungs-Information
- 106: Antennensymbol
- 107: elektrische Kopplung
- 108, 108': Antennensymbol
- 109: Pfeil
- 110: Aktorelement
- 111: Pfeil
- 202: Sende-/Empfangseinheit
- 203: erstes Sende-/Empfangselement
- 204: zweites Sende-/Empfangselement
- 205: Kennungs-Information
- 206: Antennensymbol
- 207: elektrische Kopplung
- 208: Antennensymbol
- 209: Pfeil
- 211: Pfeil
- 212: elektrischer Anschluss
- 213: Prozessorkern
- 214a, 214b, 214c, 214d: elektrische Anschlüsse
- 215a, 215b, 215c, 215d: Schaltelemente
- 216: Schalt-Versorgungs-Element
- 300: Sensor-/Aktor-Anordnung
- 301: Sensorelement
- 302: Sende-/Empfangseinheit
- 307: elektrische Kopplung
- 400: Sensor-/Aktor-Anordnung
- 401: Sensorelement
- 401a: Sensorfläche
- 402: Sende-/Empfangseinheit
- 403: erstes Sende-/Empfangselement
- 404: zweites Sende-/Empfangselement
- 405: Kennungs-Information
- 406: Antennensymbol
- 407: elektrische Kopplung
- 408: Antennensymbol
- 417: Sende-/Empfangs-Einrichtung
- 418: Antennensymbol
- 419: Steuer-Einrichtung
- 450: Fläche
- 451: Roboterfahrzeug
- 452: Antennensymbol
- 453: Person
- 500: Flussdiagramm
- 501,502, 503: Flussdiagramm-Schritte
- 600: Flussdiagramm
- 601,602, 603,604: Flussdiagramm-Schritte

## Patentansprüche

1. Flächenverkleidungs-Anordnung, aufweisend:
• eine Flächenverkleidung mit
- mindestens einem Sensorelement (401);
- mindestens einer Sende-/Empfangseinheit (402), welche mindestens ein erstes Sende-/Empfangselement (403) und ein zweites Sende-/Empfangselement (404) zum Senden und/oder Empfangen von Signalen aufweist;
- wobei das erste Sende-/Empfangselement (403) so eingerichtet ist, dass eine in dem ersten Sende-/Empfangselement (403) enthaltene Kennungs-Information (405) mittels eines ersten Kommunikationskanals drahtlos ausgelesen werden kann; und
- wobei das zweite Sende-/Empfangselement (404) mit dem mindestens einen Sensorelement (401) elektrisch gekoppelt ist, derart, dass mit Hilfe des zweiten Sende-/Empfangselementes (404) ein von dem mindestens einen Sensorelement (401) bereitgestelltes Sensorsignal mittels eines zweiten Kommunikationskanals gesendet werden kann; und
• eine zentrale Steuer-Einrichtung (419), welche eingerichtet ist,
- von sich auf der Flächenverkleidung befindlichen beweglichen Objekten (451) die in dem ersten Sende-/Empfangselement (403) enthaltene Kennungsinformation (405) zu empfangen und auszuwerten zur Lokalisation und/oder Bewegungsverfolgung von sich auf der Flächenverkleidung befindlichen beweglichen Objekten (451),
- das Sensorsignal zu empfangen und auszuwerten zur Lokalisation und/oder Bewegungsverfolgung von sich auf der Flächenverkleidung befindlichen Personen (453), und
- basierend auf der Lokalisation und/oder Bewegungsverfolgung der Personen (453) und/oder beweglichen Objekte (451) Steuersignale an eines oder mehrere der beweglichen Objekte (451) zu übermitteln.

2. Flächenverkleidungs-Anordnung gemäß Anspruch 1, wobei die Flächenverkleidung ferner mindestens ein Aktorelement aufweist, und wobei das zweite Sende-/Empfangselement (404) mit dem mindestens einen Aktorelement elektrisch gekoppelt ist, derart, dass mit Hilfe des zweiten Sende-/Empfangselementes (404) ein mittels des zweiten Kommunikationskanals empfangenes Aktor-Steuersignal an dem mindestens einen Aktorelement bereitgestellt werden kann.

3. Flächenverkleidungs-Anordnung gemäß Anspruch 1 oder 2, wobei das erste Sende-/Empfangselement (403) so eingerichtet ist, dass die Kennungs-Information (405) mit Hilfe eines Drahtlos-Signals mit einer ersten Sende-/Empfangsfrequenz (f₁) ausgelesen werden kann.

4. Flächenverkleidungs-Anordnung gemäß Anspruch 3, wobei das zweite Sende-/Empfangselement (404) so eingerichtet ist, dass das Sensorsignal als Drahtlos-Signal mit einer zweiten Sende-/Empfangsfrequenz (f₂) gesendet werden kann.

5. Sensor-/Aktor-Anordnung gemäß Anspruch 4, wobei das zweite Sende-/Empfangselement (404) so eingerichtet ist, dass das Aktor-Steuersignal als Drahtlos-Signal mit einer dritten Sende-/Empfangsfrequenz empfangen werden kann.

6. Flächenverkleidungs-Anordnung gemäß einem der Ansprüche 1 bis 5, wobei die in dem ersten Sende-/Empfangselement (403) enthaltene Kennungs-Information (405) als eine für die mindestens eine Sende-/Empfangseinheit (402) eindeutige Kennungs-Information ausgebildet ist.

7. Flächenverkleidungs-Anordnung gemäß einem der Ansprüche 1 bis 6, wobei das erste Sende-/Empfangselement (403) und/oder das zweite Sende-/Empfangselement (404) als RF-Element ausgebildet ist.

8. Flächenverkleidungs-Anordnung gemäß Anspruch 7, wobei das erste Sende-/Empfangselement (403) als passives RF-Element ausgebildet ist.

9. Flächenverkleidungs-Anordnung gemäß einem der Ansprüche 7 bis 8, wobei das erste Sende-/Empfangselement (403) als RFID-Tag ausgebildet ist.

10. Flächenverkleidungs-Anordnung, aufweisend:
• eine Flächenverkleidung mit
- mindestens einem Sensorelement;
- mindestens einer Sende-/Empfangseinheit, welche mindestens ein Sende-/Empfangselement zum Senden und/oder Empfangen von Signalen aufweist;
- wobei das Sende-/Empfangselement so eingerichtet ist, dass mit Hilfe des Sende-/Empfangselements eine in dem Sende-/Empfangselement enthaltene Kennungs-Information mittels eines Drahtlos-Kommunikationskanals drahtlos gesendet werden; und
- wobei das Sende-/Empfangselement mit dem mindestens einen Sensorelement elektrisch gekoppelt ist, derart, dass mit Hilfe des Sende-/Empfangselementes ein von dem mindestens einen Sensorelement bereitgestelltes Sensorsignal mittels des Drahtlos-Kommunikationskanals gesendet werden kann; und
• eine zentrale Steuer-Einrichtung, welche eingerichtet ist,
- von sich auf der Flächenverkleidung befindlichen beweglichen Objekten die in dem Sende-/Empfangselement enthaltene Kennungsinformation zu empfangen und auszuwerten zur Lokalisation und/oder Bewegungsverfolgung von sich auf der Flächenverkleidung befindlichen beweglichen Objekten,
- das Sensorsignal zu empfangen und auszuwerten zur Lokalisation und/oder Bewegungsverfolgung von sich auf der Flächenverkleidung befindlichen Personen, und
- basierend auf der Lokalisation und/oder Bewegungsverfolgung der Personen und/oder beweglichen Objekte Steuersignale an eines oder mehrere der beweglichen Objekte zu übermitteln.

11. Flächenverkleidungs-Anordnung gemäß Anspruch 10 wobei das Sende-/Empfangselement so eingerichtet ist, dass mit Hilfe des Sende-/Empfangselementes zusätzlich zum Senden der Kennungs-Information eine zusätzliche Kennungs-Information mittels des Drahtlos-Kommunikationskanals drahtlos gesendet werden kann, mit welcher zusätzlichen Kennungs-Information die in dem Sende-/Empfangselement enthaltene und mittels des Drahtlos-Kommunikationskanals drahtlos gesendete Kennungs-Information von anderen von dem Sende-/Empfangselement mittels des Drahtlos-Kommunikationskanals gesendeten Nachrichten unterschieden werden kann.

12. Flächenverkleidungs-Anordnung gemäß einem der Ansprüche 1 bis 11, mit
• einer Mehrzahl von Sensorelementen (401) und/oder einer Mehrzahl von Aktorelementen;
• einer Mehrzahl von zumindest teilweise miteinander und/oder mit der Mehrzahl von Sensorelementen (401) und/oder mit der Mehrzahl von Aktorelementen elektrisch gekoppelten Sende-/Empfangseinheiten (402),
• wobei die Mehrzahl von Sensorelementen (401) und/oder die Mehrzahl von Aktorelementen und/oder die Mehrzahl von Sende-/Empfangseinheiten (402) in der Flächenverkleidung ausgebildet sind.

13. Flächenverkleidungs-Anordnung gemäß Anspruch 12, wobei die Mehrzahl von Sensorelementen (401) und/oder die Mehrzahl von Aktorelementen und/oder die Mehrzahl von Sende-/Empfangseinheiten (402) auf der Unterseite einer Bodenverkleidung und/oder auf der Unterseite einer Wandverkleidung ausgebildet sind.

14. Flächenverkleidungs-Anordnung gemäß einem der Ansprüche 12 bis 13, mit mindestens einer Sende-/Empfangs-Einrichtung (417) zum Drahtlos-Kommunizieren mit mindestens einem der Sende-/Empfangselemente oder der zweiten Sende-/Empfangselemente (404) der Mehrzahl von Sende-/Empfangseinheiten (402) und/oder mit mindestens einem auf der Flächenverkleidung befindlichen beweglichen Objekt (451).

15. Verfahren zum Lokalisieren und/oder Leiten von beweglichen Objekten und/oder Personen auf einer Fläche mit Hilfe einer Flächenverkleidungs-Anordnung gemäß einem der Ansprüche 12 bis 14,
• wobei mit Hilfe der Sensorelemente und/oder der Sende-/Empfangseinheiten Informationen über die Positionen von sich auf der Fläche befindlichen beweglichen Objekten und/oder Personen erfasst werden, welche Informationen zum Lokalisieren der Objekte und/oder Personen verwendet werden;
• wobei mit Hilfe der zentralen Steuer-Einrichtung der Flächenverkleidungs-Anordnung
- von sich auf der Fläche befindlichen beweglichen Objekten die in den Sende-/Empfangselementen enthaltenen Kennungsinformationen empfangen und ausgewertet werden zur Lokalisation und/oder Bewegungsverfolgung von sich auf der Fläche befindlichen beweglichen Objekten,
- Sensorsignale der Sensorelemente empfangen und ausgewertet werden zur Lokalisation und/oder Bewegungsverfolgung von sich auf der Fläche befindlichen Personen, und
- basierend auf der Lokalisation und/oder Bewegungsverfolgung der Personen und/oder beweglichen Objekte Steuersignale an eines oder mehrere der sich auf der Fläche befindlichen beweglichen Objekte übermittelt werden; und
• wobei mit Hilfe der Aktorelemente und/oder der Sende-/Empfangseinheiten den sich auf der Fläche befindlichen beweglichen Objekten und/oder Personen Informationen bereitgestellt werden, welche Informationen zum Leiten der Objekte und/oder Personen auf der Fläche dienen.

## Claims

1. Surface covering arrangement, comprising:
• a surface covering having
∘ at least one sensor element (401);
∘ at least one transmission/reception unit (402) which has at least one first transmission/reception element (403) and a second transmission/reception element (404) for sending and/or receiving signals;
∘ wherein the first transmission/reception element (403) is configured such that an identification information (405) contained in the first transmission/reception element (403) can be read wirelessly using a first communication channel; and
∘ wherein the second transmission/reception element (404) is electrically coupled to the at least one sensor element (401) such that by means of the second transmission/reception element (404) a sensor signal provided by the at least one sensor element (401) may be sent using a second communication channel; and
• a central control device (419) which is configured to
∘ receive and to evaluate the identification information (405) contained in the first transmission/reception element (403) from movable objects located on the surface covering for localization and/or movement tracking of movable objects (451) located on the surface covering,
∘ receive and evaluate the sensor signal for localization and/or movement tracking of persons (453) located on the surface covering,
∘ transmit control signals to one or more of the movable objects (451) based on the localization and/or movement tracking of the persons (453) and/or movable objects.

2. Surface covering arrangement according to claim 1, wherein the surface covering comprises at least one actuator element and wherein the second transmission/reception element (404) is electrically coupled with at least one actuator element such that by means of the second transmission/reception element (404) an actuator control signal received by means of the second communication channel can be provided at the at least one actuator element.

3. Surface covering arrangement according to claim 1 or 2, wherein the first transmission/reception element (403) is configured such that the identification information (405) can be read using a wireless signal at a first transmission/reception frequency (f₁).

4. Surface covering arrangement according to claim 3, wherein the second transmission/reception element (404) is configured such that the sensor signal can be sent as a wireless signal at a second transmission/reception frequency (f₂).

5. Sensor/actor arrangement according to claim 4, wherein the second transmission/reception element (404) is configured such that the actuator control signal can be received as a wireless signal at a third transmission/reception frequency.

6. Surface covering arrangement according to any one of claims 1 to 5, wherein the identification information (405) contained in the first transmission/reception element (403) is formed as an identification information which is formed as unambiguous identification information for the at least one transmission/reception unit (402).

7. Surface covering arrangement according to any one of claims 1 to 6, wherein the first transmission/reception element (403) and/or the second transmission/reception element (404) is formed as RF element.

8. Surface covering arrangement according to claim 7, wherein the first transmission/reception element (403) is formed as a passive RF element.

9. Surface covering arrangement according to one of the claims 7 to 8, wherein the first transmission/reception element (403) is formed as RFID tag.

10. A surface covering arrangement comprising:
• a surface covering having
o at least one sensor element;
o at least one transmission/reception unit which has at least one transmission/reception element for sending and/or receiving signals;
o wherein the transmission/reception element is configured such that by means of the transmission/reception element an identification information contained in the transmission/reception element is sent using a wireless communication channel; and
• wherein the transmission/reception element is electrically coupled to the at least one sensor element such that by means of the transmission/reception element a sensor signal provided by the at least one sensor element can be sent using the wireless communication channel; and
• a central control device which is configured to
∘ receive and to evaluate the identification information contained in the transmission/reception element from movable objects located on the surface covering for localization or movement tracking of movable objects located on the surface covering,
∘ receive and evaluate the sensor signal for localization and/or movement tracking of persons located on the surface covering,
∘ transmit control signals to one or more of the movable objects based on the localization and/or movement tracking of the persons (453) and/or movable objects.

11. Surface covering arrangement according to claim 10,
wherein the transmission/reception element is configured such that by means of the transmission/reception element, in addition to sending the identification information, an additional identification information can be sent by means of the wireless communication channel, wherein with the additional identification information the identification information which is contained in the transmission/reception element and which is sent wirelessly using the wireless communication channel can be distinguished from other messages sent by the transmission/reception element using the wireless communication channel.

12. Surface covering arrangement according to one of claims 1 to 11, having
• a plurality of sensor elements (401) and/or a plurality of actuator elements;
• a plurality of transmission/reception units (402) which are electrically coupled at least in part to one another and/or to the plurality of sensor elements (401) and/or to the plurality of actuator elements,
• wherein the plurality of sensor elements (401) and/or the plurality of actuator elements and/or the plurality of transmission/reception units (402) are formed in the surface covering.

13. Surface covering arrangement according to claim 12, wherein the plurality of sensor elements (401) and/or the plurality of actuator elements and/or the plurality of transmission/reception units (402) are formed on the underside of a floor covering and/or on the underside of a wall covering.

14. Surface covering arrangement according to one of claims 12 to 13, having at least one transmission/reception device (417) for wireless communication with at least one of the transmission/reception elements or of the second transmission/reception elements (404) of the plurality of transmission/reception elements (402) and/or with at least one moving object (451) situated on the surface covering.

15. A method for locating and/or guiding moving objects and/or people on a surface by means of a surface covering arrangement according to one of claims 12 to 14,
• wherein by means of the sensor elements and/or the transmission/reception units information about the positions of moving objects and/or people located on the surface are captured, which information is used for locating the objects and/or people;
• wherein by means of the central control device of the surface covering arrangement
∘ the identification information contained in the transmission/reception elements is received from movable objects located on the surface covering and evaluated for localization and/or movement tracking of movable objects located on the surface covering,
∘ sensor signals of the sensor elements are received and evaluated for localization and/or movement tracking of persons located on the surface covering, and
∘ based on the localization and/or movement tracking of the persons and/or movable objects control signals are transmitted to one or more of the movable objects located on the surface; and
• wherein by means of the actuator elements and/or the transmission/reception units the movable objects and/or persons are provided with information which serve for guiding the objects and or persons on the surface.

## Revendications

1. Ensemble de revêtement de surface, comprenant :
• un revêtement de surface pourvu
- d'au moins un élément capteur (401) ;
- d'au moins une unité d'émission/de réception (402), laquelle comprend au moins un premier élément émetteur/récepteur (403) et un second élément émetteur/récepteur (404) destiné à émettre et/ou à recevoir des signaux ;
- le premier élément émetteur/récepteur (403) étant conçu pour qu'une information caractérisante (405) contenue dans le premier élément émetteur/récepteur (403) puisse être consultée sans fil au moyen d'un premier canal de communication ; et
- le second élément émetteur/récepteur (404) étant couplé électriquement à ou aux éléments capteurs (401), de telle manière qu'un signal de capteur mis à disposition par le ou les éléments capteurs (401) peut être envoyé au moyen d'un second canal de communication à l'aide du second élément émetteur/récepteur (404) ; et
• un dispositif de commande central (419), lequel est conçu
- pour recevoir des objets mobiles (451) situés sur le revêtement de surface l'information caractérisante (405) contenue dans le premier élément émetteur/récepteur (403) et pour l'analyser afin de localiser et/ou de suivre le mouvement d'objets mobiles (451) situés sur le revêtement de surface,
- pour recevoir le signal de capteur et pour l'analyser afin de localiser et/ou suivre le mouvement de personnes (453) situées sur le revêtement de surface, et
- pour transmettre des signaux de commande à un ou à plusieurs des objets mobiles (451) sur la base de la localisation et/ou du suivi du mouvement des personnes (453) et/ou des objets mobiles (451).

2. Ensemble de revêtement de surface selon la revendication 1, le revêtement de surface présentant en outre au moins un élément activateur, et le second élément émetteur/récepteur (404) étant couplé électriquement à l'élément ou aux éléments activateurs, de telle manière qu'un signal de commande d'activateur reçu au moyen du second canal de communication peut être remis à l'élément ou aux éléments activateurs à l'aide du second élément émetteur/récepteur (404).

3. Ensemble de revêtement de surface selon la revendication 1 ou 2, le premier élément d'émission/de réception (403) étant conçu pour que l'information caractérisante (405) puisse être consultée à l'aide d'un signal sans fil présentant une première fréquence d'émission/de réception (f₁).

4. Ensemble de revêtement de surface selon la revendication 3, le second élément émetteur/récepteur (404) étant conçu pour que le signal de capteur puisse être envoyé sous la forme d'un signal sans fil présentant une deuxième fréquence d'émission/de réception (f₂).

5. Ensemble de revêtement de surface selon la revendication 4, le second élément émetteur/récepteur (404) étant conçu pour que le signal de commande d'activateur puisse être reçu sous la forme d'un signal sans fil présentant une troisième fréquence d'émission/de réception.

6. Ensemble de revêtement de surface selon l'une quelconque des revendications 1 à 5, l'information caractérisante (405) contenue dans le premier élément émetteur/récepteur (403) étant réalisée sous la forme d'une information caractérisante claire pour la ou les unités d'émission/de réception (402).

7. Ensemble de revêtement de surface selon l'une quelconque des revendications 1 à 6, le premier élément émetteur/récepteur (403) et/ou le second élément émetteur/récepteur (404) étant réalisés sous la forme d'un élément RF.

8. Ensemble de revêtement de surface selon la revendication 7, le premier élément émetteur/récepteur (403) étant réalisé sous la forme d'un élément RF passif.

9. Ensemble de revêtement de surface selon l'une quelconque des revendications 7 à 8, le premier élément émetteur/récepteur (403) étant réalisé sous la forme d'une étiquette RFID.

10. Ensemble de revêtement de surface, comprenant :
• un revêtement de surface pourvu
- d'au moins un élément capteur ;
- d'au moins une unité d'émission/de réception, laquelle comprend au moins un élément émetteur/récepteur destiné à envoyer et/ou à recevoir des signaux ;
- l'élément émetteur/récepteur étant conçu pour qu'une information caractérisante contenue dans l'élément émetteur/récepteur puisse être consultée sans fil au moyen d'un canal de communication sans fil à l'aide de l'élément émetteur/récepteur ; et
- l'élément émetteur/récepteur étant couplé électriquement au ou aux éléments capteurs, de telle manière qu'un signal de capteur mis à disposition par le ou les éléments capteurs peut être envoyé au moyen du canal de communication sans fil à l'aide de l'élément émetteur/récepteur ; et
• un dispositif de commande central, lequel est conçu
- pour recevoir des objets situés sur le revêtement de surface l'information caractérisante contenue dans l'élément émetteur/récepteur, et pour l'analyser afin de localiser et/ou de suivre le mouvement d'objets mobiles situés sur le revêtement de surface,
- pour recevoir le signal de capteur et pour l'analyser afin de localiser et/ou de suivre le mouvement de personnes situées sur le revêtement de surface, et
- pour transmettre des signaux de commande à un ou à plusieurs des objets mobiles sur la base de la localisation et/ou du suivi du mouvement des personnes et/ou des objets mobiles.

11. Ensemble de revêtement de surface selon la revendication 10, l'élément émetteur/récepteur étant conçu pour qu'une information caractérisante supplémentaire puisse être envoyée sans fil au moyen du canal de communication sans fil à l'aide de l'élément émetteur/récepteur, cette information caractérisante supplémentaire permettant de faire la distinction entre l'information caractérisante contenue dans l'élément émetteur/récepteur et envoyée sans fil au moyen du canal de communication sans fil et d'autres messages envoyés par l'élément émetteur/récepteur au moyen du canal de communication sans fil.

12. Ensemble de revêtement de surface selon l'une quelconque des revendications 1 à 11, pourvu
• d'une pluralité d'éléments capteurs (401) et/ou d'une pluralité d'éléments activateurs ;
• d'une pluralité d'unités d'émission/de réception (402) couplées électriquement au moins en partie les unes aux autres et/ou à la pluralité d'éléments capteurs (401) et/ou à la pluralité d'éléments activateurs,
• la pluralité d'éléments capteurs (401) et/ou la pluralité d'éléments activateurs et/ou la pluralité d'unités d'émission/de réception (402) étant formés dans le revêtement de surface.

13. Ensemble de revêtement de surface selon la revendication 12, la pluralité d'éléments capteurs (401) et/ou la pluralité d'éléments activateurs et/ou la pluralité d'unités d'émission/de réception (402) étant formés sur la face inférieure d'un revêtement de sol et/ou sur la face inférieure d'un revêtement mural.

14. Ensemble de revêtement de surface selon l'une quelconque des revendications 12 à 13, comprenant au moins un dispositif d'émission/de réception (417) permettant de communiquer sans fil avec au moins un des éléments d'émission/de réception ou les seconds éléments d'émission/de réception (404) de la pluralité d'unités d'émission/de réception (402) et/ou avec au moins un objet mobile (451) situé sur le revêtement de surface.

15. Procédé permettant de localiser et/ou de diriger des objets mobiles et/ou des personnes sur une surface à l'aide d'un ensemble de revêtement de surface selon l'une quelconque des revendications 12 à 14,
• les informations concernant les positions d'objets mobiles et/ou de personnes situés sur la surface, lesquelles informations sont utilisées pour localiser les objets et/ou les personnes, étant détectées à l'aide des éléments capteurs et/ou des unités d'émission/de réception ;
• à l'aide du dispositif de commande central de l'ensemble de revêtement de surface
- les informations caractérisantes contenues dans les éléments d'émission/de réception étant reçues des objets mobiles situés sur la surface et analysées pour localiser et/ou suivre le mouvement d'objets mobiles situés sur la surface,
- les signaux de capteur étant reçus des éléments capteurs et analysés pour localiser et/ou suivre le mouvement de personnes situées sur la surface, et
- sur la base de la localisation et/ou du suivi du mouvement de personnes et/ou d'objets mobiles, des signaux de commande étant transmis à un ou plusieurs des objets situés sur la surface ; et
• des informations servant à diriger les objets et/ou les personnes sur la surface étant mises à la disposition d'objets mobiles et/ou de personnes à l'aide des éléments activateurs et/ou des unités d'émission/de réception.
